(19) **Europäisches Patentamt / European Patent Office / Office européen des brevets**

(11) **EP 4 661 334 A1**

(12) # EUROPEAN PATENT APPLICATION

(43) Date of publication:
**10.12.2025 Bulletin 2025/50**

(21) Application number: **24315270.9**

(22) Date of filing: **05.06.2024**

(51) International Patent Classification (IPC):
**H04L 9/00** *(2022.01)*

(52) Cooperative Patent Classification (CPC):
**H04L 9/50; H04L 9/3239;** H04L 9/008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Zama SAS**
**75002 Paris (FR)**

(72) Inventors:
• **Danjou, Clément Benoît Claude**
**75002 Paris (FR)**
• **Ivanov, Petar Nedkov**
**75002 Paris (FR)**
• **Jørgensen, Morten Dahl**
**75002 Paris (FR)**

(74) Representative: **DeltaPatents B.V.**
**Fellenoord 370**
**5611 ZL Eindhoven (NL)**

(54) **METHOD AND SYSTEM FOR EXECUTING COMPUTATIONS ASSOCIATED WITH A DISTRIBUTED LEDGER**

(57) Some embodiments are directed to a method for executing computations associated with a distributed ledger, the distributed ledger storing a smart contract, the smart contract encoding a predefined computation. The method including symbolically performing the computation, wherein at least one output of the computation is symbolically represented as an output handle referencing the computation result, and performing an actual execution of the computation.

*Fig. 2a*

EP 4 661 334 A1

**Description**

**TECHNICAL FIELD**

The presently disclosed subject matter relates to a method for executing computations associated with a distributed ledger, a method for a distributed ledger node, a method for a computation node, a system, and a computer storage medium.

**BACKGROUND**

Blockchain coprocessors are off-chain components used to offload complex and expensive computations from blockchains. They are needed, because the cost of running these computations on-chain would be very high as blockchains are typically designed to run simple programs in the form of smart contracts.

Coprocessors don't require changes to the existing blockchain they are deployed for.

One type of coprocessor is what is called a ZK coprocessor, in particular RISC Zero's Bonsai. It listens for requests for computation on the blockchain, executes the computation off-chain and then puts the result back on-chain. The ZK part means zero-knowledge: the ZK coprocessor generates a ZK proof of correct computation that can be publicly verified in a smart contract on the blockchain. The ZK coprocessor does not offer confidentiality, though, because generating the ZK proof requires running the program with the input and output data in the plain. Note that the program the ZK coprocessor runs is off-chain and is referred to by smart contracts on the blockchain via an identifier.

A different type of coprocessor is an FHE coprocessor that utilizes Fully Homomorphic Encryption (FHE) to provide confidentiality. In particular, Fhenix's and EigenLayer's FHE coprocessor. It allows for off-chain computation on encrypted data, without needing the data in plain. FHE computation is expensive, hence the need for a coprocessor. In that solution, the FHE coprocessor listens for computation requests on-chain, does the execution on encrypted inputs, passes the encrypted result to a threshold decryption network for decryption and, finally, puts the plaintext result back on-chain.

With RISC Zero's solution, the program is stored off-chain and is written in a programming language that is different from the one used to write the smart contract. Furthermore, once computation is complete on the RISC Zero's ZK coprocessor, the result is put back on the blockchain, without the ability to store intermediate results off-chain for future computation. Fhenix's and EigenLayer's FHE coprocessor solution provides confidentiality for inputs only as results are decrypted before being put back on the blockchain as part of the flow.

**SUMMARY**

There is a desire to allow complicated computations to be done on a distributed ledger, in particular to do confidential computations. A method according to the invention provides two types of computations: symbolic computation to be done on the distributed ledger, and actual computations to be done off the distributed ledger. This has several advantages as set out herein. In particular, it allows for confidential computation on a distributed ledger, e.g., a blockchain, without imposing a too large computational burden thereon. Embodiments provide confidentiality of the inputs, without requiring outputs to be decrypted. Furthermore, these outputs can be used as inputs for a next computation. Existing coprocessors do not allow this.

In an embodiment, a distributed ledger node, sometimes called a full node, or a miner, performs only the symbolic execution. A computation node may perform both the symbolic execution and an actual computation. The symbolic execution mirrors the actual computation, except that it refers to input and/or output data using handles, rather than actual data. The handles may be referred to as symbolic values, as they are input and/or output to a symbolic execution.

The computation node may perform the same function as a distributed ledger node, and in addition perform actual computations according to an embodiment. In an embodiment, the computation node does not perform the symbolic computation itself.

Furthermore, a client device or client node is provided which may initiate a computation on the distributed ledger.

Aspect are methods to perform computations associated with a distributed ledger. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into a server, and when the computer program is available for downloading from such a server.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a computation system,
Figure 1b schematically shows an example of an embodiment of a computation system,
Figure 2a schematically shows an example of an embodiment of a computation system,
Figure 2b schematically shows an example of an embodiment of a computation system,
Figure 2c schematically shows an example of a detail of an embodiment of a computation system,
Figure 2d schematically shows an example of a detail of an embodiment of a computation system,
Figure 3 schematically shows an example of an embodiment of a computation system,
Figure 4 schematically shows an example of an embodiment of a computation method,
Figure 5 schematically shows an example of an embodiment of a decryption method,
Figure 6 schematically shows an example of an embodiment of a re-encryption method,
Figure 7 schematically shows an example of an embodiment of a computation method,
Figure 8a schematically shows a computer readable medium having a writable part comprising a computer program according to an embodiment,
Figure 8b schematically shows a representation of a processor system according to an embodiment.

Reference signs list

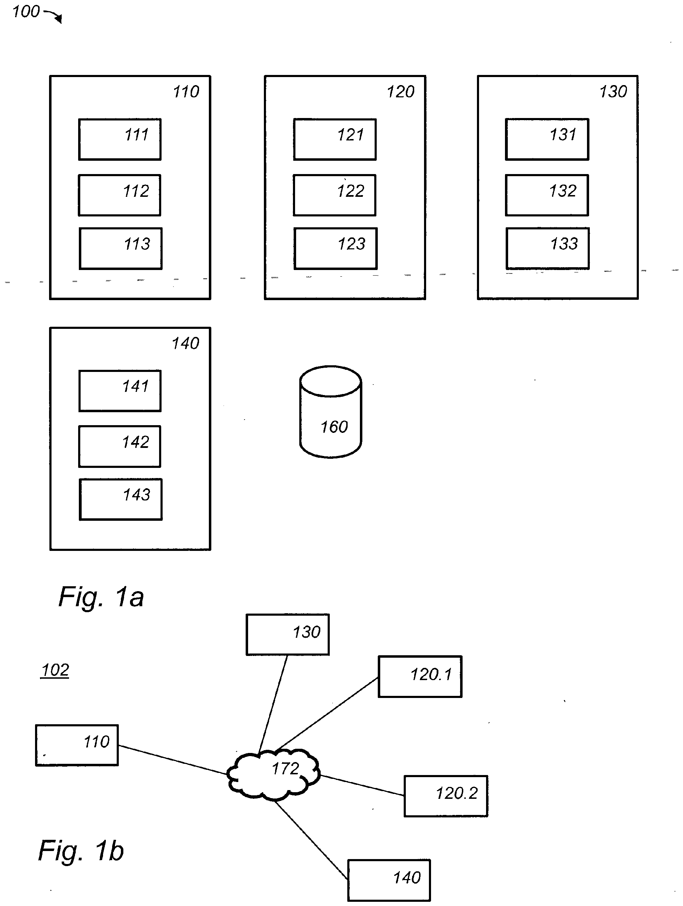

The following list of references and abbreviations corresponds to figures 1a-2d, and is provided for facilitating the interpretation of the drawings and shall not be construed as limiting the claims.

| | |
|---|---|
| 100, 102, 103 | a computation system |
| 110 | a distributed ledger computation node |
| 120, 120.1, 120.2 | a distributed ledger node |
| 130 | a client device |
| 140 | a key management service server |
| 150 | an access control mechanism |
| 160 | a database |
| 111, 121, 131, 141 | a processor system |
| 112, 122, 132, 142 | storage |
| 113, 123, 133, 143 | communication interface |
| 172 | a computer network |
| 210 | a distributed ledger |
| 220 | a smart contract |
| 240 | a KMS smart contract |
| 250 | an access control smart contract |
| 221 | a computation |
| 115 | a smart contract execution part |
| 116 | an actual computation part |
| 310 | coprocessor, e.g., computation node |
| 312 | a full node |
| 320 | Blockchain |
| 321 | Coprocessor contract |
| 322 | ACL contract |
| 323 | KMS contract |
| 330 | User, e.g., client device |
| 340 | KMS |
| 350 | Oracle service |
| 311 | database |

| 360 | public data availability layer |
|---|---|
| 370 | Gateway |

| 1000, 1001 | a computer readable medium |
|---|---|
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a distributed ledger computation node 110, an embodiment of a distributed ledger node 120, an embodiment of a client device 130, and an embodiment of key management service server 140. Computation node 110 is also referred to herein as a coprocessor.

Computation node 110, distributed ledger node 120, client device 130, and key management service server 140 may be part of a computation system 100.

Distributed ledger node 120 may support a distributed ledger. For example, the node may be a computer that connects to the distributed ledger, and that supports the distributed ledger through various tasks, including one or more of: transaction verification, propagation, and storing a copy of the ledger. Distributed ledger node 120 is configured to perform a smart contract execution for a smart contract stored on a distributed ledger, in particular a smart contract implementing symbolic execution of a computation.

For example, in symbolic computation, computations are not performed on the actual data themselves, or at least not only on such data, but on handles referencing the data, e.g., the handle corresponds to the data, though the data itself is not directly available from the handle. To symbolically compute an operation that involves a handle, a new handle is determined that symbolically represents operation, its input-at least one of which is a handle-and optionally other data. It is not required that operation or operands can be retrieved from the handle, although this is possible; in fact, in a typical embodiment, a one-way function is used to determine a new handle, e.g., from at least operation and operands.

Handles used for symbolic computation correspond to actual data suitable for computation, e.g., mathematical objects such as values, e.g., integers, ring elements, polynomials, and the like. Interestingly, computation node 120 does not receive the plain data corresponding to the handle(s).

Distributed ledger node 120 may be a conventional node for the type of the distributed ledger, but provided with a smart contract according to an embodiment. For example, node 120 may be a so-called miner. Distributed ledger node 120 may participate in the distributed ledger consensus mechanism, such as proof of work (PoW), or proof of stake (PoS), e.g., as used in Ethereum, etc.

Distributed ledger node 120 may validate new transactions and record them on the distributed ledger, e.g., by obtaining a proof of work, such as solving cryptographic challenge, thus creating new blocks, other consensus mechanisms are possible, e.g., proof of stake.

Distributed ledger computation node 110, or computation node 110 for short, is configured to execute computations associated with a distributed ledger. Computation node 110 performs two functions: performing a smart contract execution using symbolic execution, and performing an actual execution of the computation corresponding to the symbolic execution. Performing a smart contract execution may be done in the same or similar way as node 120 does. In an embodiment the distributed ledger computation node 110 is configured as a node 120, and will perform the same tasks as a regular node 120 would. However, computation node 110 has an extended functionality, namely, also performing actual computation in addition to symbolic computations. In an actual computation, neither operation nor operand are symbolically represented, but data is used that encodes the mathematical objects on which the computation is to be performed.

Encoding the data may be in a plaintext encoding, but in a typical example, the data is encrypted for computation node 110. To perform computations on encrypted data, fully homomorphic encryption (FHE) may be used. Using FHE has the advantage that computation node 110 does not gain access to the underlying data. In effect this creates confidential smart contracts, in which smart contracts are used, along with the advantages of storing them on the distributed ledger, but on the other hand allowing them to operate on confidential data.

It is not necessary that computation node 110 perform all the same duties as a full node would, e.g., a full miner or the like. For example, computation node 110 might not propagate. For example, a full node typically participates in propagation. Propagation involves forwarding information on the state of the distributed ledger to other nodes, e.g., full nodes, such as new transactions, newly mined blocks, or updates to the distributed ledger. It is convenient if computation node 110 is a full node, in the sense that it stores the full distributed ledger, and/or that computation node 110 is configured to verify changes to the distributed ledger that it receives from full nodes. However, computation node 110 may not participate in all duties of a full node, e.g., computation node 110 may not participate in propagation, may not generate new blocks, may not contribute to consensus building, etc. Although it is convenient that computation node 110 has a current copy of the distributed ledger, this is also not strictly necessary, and could, e.g., be avoided by using proofs.

Client device 130 is configured to use the distributed ledger. In particular, the client device 130 may send a transaction to the distributed ledger, e.g., through a node such as nodes 110 or 120, that would cause a smart contract on the distributed ledger to execute on a node, such as node 120. The smart contract may also be executed on computation node 110; although that is not strictly necessary. Computation node 110 could accept the results from other nodes and only to the corresponding actual computation.

Client device 130 may for example, be a so-called Client Wallet, e.g., when it primarily manages the user's cryptographic keys and facilitates transactions on the blockchain. In an embodiment, client device 130 may have broader capabilities beyond transaction management, e.g., running a lightweight version of the distributed ledger. Client device 130 may implement a so-called Light Client.

Client device 130 may be configured for various functions according to an embodiment. For example, client device 130 may determine a handle for input data, e.g., a value, e.g., an integer, e.g., the handle being suitable for symbolic computation by computation device 110 and/or node 120; register the handle and input data, e.g., with a database, and optionally receive a signature therefor; send a transaction to the distributed ledger initiating the computation, wherein the transaction may comprise the handle and/or the corresponding signature; initiate a decryption and/or re-encryption of a ciphertext corresponding to a handle.

Key management service server 140, or KMS server 140 for short, is configured to perform decryption and/or re-encryption of ciphertext corresponding to a handle. KMS 140 is optional. For example, a client device or client devices may keep track of a private key corresponding to public key that encrypts ciphertext corresponding to a handle. KMS may cooperate with a corresponding smart contract on the distributed ledger. Key management service may be implemented in a distributed fashion, e.g., in a key management system, the key management system comprising multiple key management service servers. For example, the key management system may require a majority of the multiple key management service servers to agree on a decision, or at least a threshold number of key management service servers, etc.

For example, the computation system 100 using confidential smart contracts has a number of use cases including confidential token transfer, confidential blind auction, confidential voting, on-chain secure randomness, on-chain gaming, confidential Decentralized Identifier (DID), and confidential tokenization. In these examples, a computation node 110 is used that operates on encrypted data.

The examples herein focus on confidential smart contracts, in which computation node 110 computes on FHE encrypted data. The motivating embodiment is to allow smart contracts to operate on encrypted data, preferably without requiring the encrypted data to be decrypted. However, such embodiments may also be configured to work on unencrypted data, e.g., non-confidential data. This would retain the advantage that large computation can be offloaded from the distributed ledger. A symbolic computation may be considerably faster and require less resources than an actual computation. This is important for a distributed ledger as computation thereon are typically slow and/or expensive.

Computation node 110 may comprise a processor system 111, a storage 112, and a communication interface 113. Distributed ledger node 120 may comprise a processor system 121, a storage 122, and a communication interface 123. Client device 130 may comprise a processor system 131, a storage 132, and a communication interface 133. KMS server 140 may comprise a processor system 141, a storage 142, and a communication interface 143.

Devices 110, 120, 130 and 140 are represented here as devices, though each one of them could just as well be implemented as systems, e.g., a geographically distributed system, e.g., a cloud computing system, e.g., a system comprising multiple computers. Devices 110, 120, 130 and 140 are represented here as separate devices, though in practice many of their functions will be integrated in a single device or system.

In the various embodiments of communication interfaces 113, 123, 133, and/or 143, the communication interfaces may be selected from various alternatives. For example, the interface may be a network interface to a local or wide area network, e.g., the Internet, a storage interface to an internal or external data storage, an application interface (API), etc.

Storage 112, 122, 132, and 142 may be, e.g., electronic storage, magnetic storage, etc. The storage may comprise local storage, e.g., a local hard drive or electronic memory. Storage 112, 122, 132, and 142 may comprise non-local storage, e.g., cloud storage. In the latter case, storage 112, 122, 132, and 142 may comprise a storage interface to the non-local storage. Storage may comprise multiple discrete sub-storages together making up storage 112, 122, 132, and 142.

Storage 112, 122, 132, and 142 may be non-transitory storage. For example, storage 112, 122, 132, and 142 may store data in the presence of power such as a volatile memory device, e.g., a Random Access Memory (RAM). For example, storage 112, 122, 132, and 142 may store data in the presence of power as well as outside the presence of power such as a non-volatile memory device, e.g., Flash memory. Storage may comprise a volatile writable part, say a RAM, a non-volatile writable part, e.g., Flash, Storage may comprise a non-volatile non-writable part, e.g., ROM.

Computation node 110 may have access to a database 160. Database 160 may comprise a mapping from handles to actual data, suitable for an actual computation. Computation node 110 may use database 160 to retrieve that actual data corresponding to a handle.

An actual computation differs from a symbolic computation in that it processes and manipulates the actual, underlying data values represented by the handles, rather than merely generating new handles. This involves performing operations as executable actions that yield tangible actual results from the data's true content. For instance, while symbolic computation might only rearrange or create new handles - referencing data, actual computation applies mathematical, logical, or functional operations to convert the corresponding data into a meaningful output or outputs.

Data may be represented in various formats and encodings suitable for actual computation. In particular, data may be encrypted according to a Fully Homomorphic Encryption (FHE) scheme. In scenarios where data is FHE encrypted, the computation node 110 is capable of performing operations on encrypted data without needing to decrypt it first. This preserves the confidentiality and security of the data while still allowing for meaningful computational work to be done, including said mathematical, logical, or functional operations. In particular, arithmetic operations can be performed in FHE. This distinguishes it from symbolic computation, which does not interact with the actual data values, whether in encrypted or unencrypted form.

The devices 110, 120, 130, and 140 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 110, 120, 130, and 140 may comprise a connection interface which is arranged to communicate within computation system 100 or outside of computation system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., sending or receiving information relating to the distributed ledger, e.g., distributed ledger nodes, e.g., blockchain blocks, sending or receiving handles for registration (this is optional and could be performed elsewhere), sending output handles corresponding to a computation result, possibly an FHE encrypted computation result.

The communication interface 123 may be used to send or receive digital data, e.g., sending or receiving information relating to the distributed ledger, e.g., distributed ledger nodes. Note both for node 110 and node 120, the distributed ledger, e.g., blockchain block, may include handles, e.g., input handles and/or output handles, which may be a result of a computation of nodes 110 and/or 120. The communication interface 133 may be used to send or receive digital data, e.g., register a handle for use in a computation, sending and/or receiving a distributed ledger information, e.g., a transaction, receiving a handle decryption and/or re-encryption. The communication interface 143 may be used to send or receive digital data, e.g. a decryption and/or reencryption request, proofs and other data related thereto, a decryption and/or re-encryption result.

The execution of devices 110, 120, 130, and 140 may be implemented in a processor system. The devices 110, 120, 130, and 140 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110, 120, 130, and 140 may comprise multiple processors. A processor circuit may be implemented in a distributed fashion, e.g., as multiple sub-processor circuits. For example, devices 110, 120, 130, and 140 may use cloud computing.

Typically, the computation node 110, distributed ledger node 120, client device 130, and KMS server 140, each comprise one or more microprocessors which executes appropriate software stored at the device; for example, that software may have been downloaded and/or stored in a corresponding memory, e.g., a volatile memory such as RAM or a non-volatile memory such as Flash.

Instead of using software to implement a function, the devices 110, 120, 130, and/or 140 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, devices 110, 120, 130, and 140 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of a computation system 102. System 102 may comprise multiple computation nodes; though shown is only computation node 110. System 102 may comprise multiple distributed ledger nodes; shown are nodes 120.1 and 120.2. Typically, a system comprises many more distributed ledger nodes. System 102 may comprise multiple client devices; though shown is only client device 130. System 102 may comprise multiple KMS servers; though shown is only KMS servers 140. In an embodiment, no KMS server is used. Decryption could be integrated with a client device, or could be offered as a distributed service.

The devices are connected through a computer network 172, e.g., the Internet.

Various variants of computation node 110 exist.

In an embodiment, computation node 110 executes both symbolic computations and actual computations. The computation node monitors the distributed ledger and performs smart contract executions as necessary. Computation node 110 may use the result of a smart contract executions only for maintaining its own copy of the distributed ledger, e.g., ensuring the local copy is correct and up to date. Computation node 110 may also participate in consensus building, but this is not necessary.

In an embodiment, computation node 110 does not perform the symbolic computations, or not all of them, but does perform all actual computations. The computation node monitors the distributed ledger, and when a symbolic computation in a smart contract execution is found, the corresponding actual computation is performed by computation node 110. In this embodiment, computation node 110 may not maintain a full distributed ledger. For example, computation node 110 could receive information on the distributed ledger from a further node, e.g., node 120, possibly together with a proof that the information is correct, in particular from a full node.

In an embodiment, computation node 110 performs symbolic and/or actual computations that have at least one input, represented as an input handle in the symbolic computation. However, it is possible that a computation does not have an input. For example, a random number generation would be an example of this.

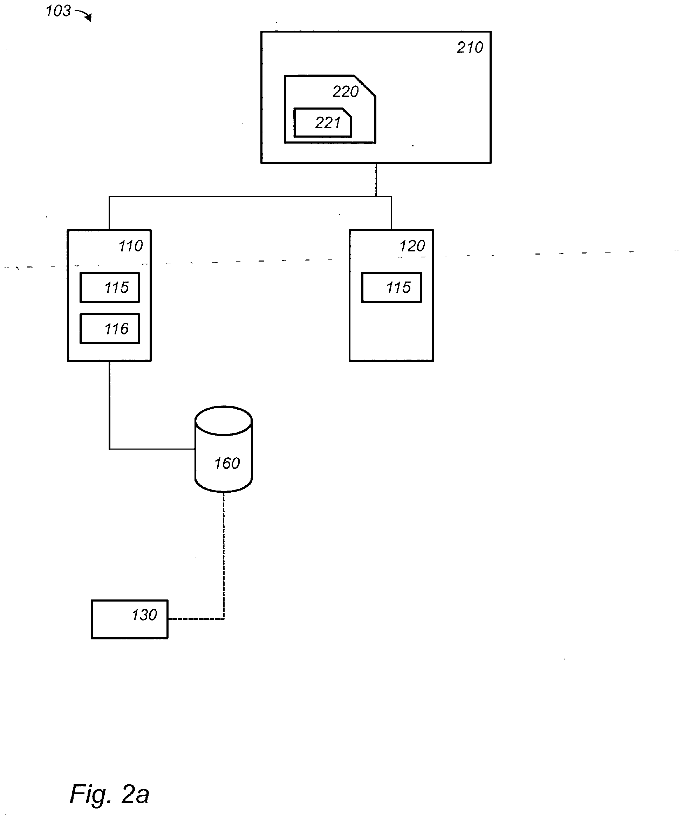

**Figure 2a** schematically shows an example of an embodiment of a computation system 103.

**Distributed ledgers.** Computation system 103 comprises a distributed ledger 210. Distributed ledger 210 stores a smart contract 220. Smart contract 220 encodes a predefined computation 221. A computation result of the computation depending on at least one input to computation 221.

A distributed ledger is a type of database that is shared and synchronized across multiple nodes. It allows transactions to have public witnesses, thereby making a cyberattack more difficult. There are various types of distributed ledger and technologies underpinning them. One example of a distributed ledger is blockchain, which comprises blocks that record and confirm transactions. An example of a blockchain-based distributed ledger is Ethereum. Another type of distributed ledger is the Tangle, which utilizes a directed acyclic graph (DAG) structure.

Consensus mechanisms are used for maintaining the integrity and security of distributed ledgers. Proof of Work (PoW) and Proof of Stake (PoS) are two prominent consensus techniques. PoW involves solving computationally intensive puzzles to validate new transactions and create new nodes in the distributed ledger, e.g., a new block in the blockchain. In PoS the creator of a new block is based on its ownership stake in the currency, which can be more energy-efficient than PoW. A further consensus mechanism that may be used is the so called Proof of Authority, e.g., as used in permissioned blockchains.

**Smart Contracts.** A smart contract is a computer program stored on the distributed ledger and executed by distributed ledger nodes, such as node 120. A smart contract may be used to encode the terms of an agreement between a buyer and a seller directly into lines of code, hence the name. However, smart contract are in principle capable of any computation. The code and the computation contained therein on the distributed ledger, e.g., across a distributed, decentralized blockchain network. Smart contracts permit computer program code to be carried out among disparate, anonymous parties without the need for a central authority, legal system, or external enforcement mechanism. They render transactions traceable, transparent, and irreversible.

A network of computers, e.g., nodes 120, execute the actions when predetermined conditions have been met. The distributed network is then updated when the smart contract execution is completed, which is irreversible. In particular, a computation result may be written to the distributed ledger.

**Distributed Ledger Nodes.** Computation system 103 comprises a distributed ledger node 120. In the context of distributed ledgers, a node refers to a computer that connects to a blockchain network and supports it, e.g., by maintaining a copy of the ledger and/or processing transactions. A node, sometimes called a full node, or miner in the context of blockchain, processes and validates new transactions. Nodes participate in the blockchain's consensus process to agree on the ledger's state. Only one node 120 is shown, though typically more nodes 120 are used in a computation system.

Regarding smart contracts, when a node detects that its conditions for execution have been met, it triggers the execution of a smart contract. This execution involves the nodes performing the instructions encoded in the smart contract as part of the transaction processing and recording the outcome on the distributed ledger. This process ensures that all network participants have a synchronized and up-to-date version of the ledger with all executions and transactions properly recorded.

Distributed ledger node 120 monitors transactions on distributed ledger 210 for activation of smart contract 220, and in particular of computation 221 therein. When such an activation is detected, it will perform a smart contract execution of smart contract 220.

Smart contract 220 or a part thereof, in particular computation 221, may be initiated by a transaction that is stored on the distributed ledger. For example, a client device may send a transaction to the distributed ledger, possibly through a node, such as node 120, as an intermediary. Acceptance of the transaction on the distributed ledger may start execution of smart contract 220 or part thereof. For example, a function of smart contract may be called, e.g., a function comprising computation 221. Smart contract 220 may be triggered by the execution of another smart contract.

The initiation may comprise input values for computation 221. An input may be read from a storage, e.g., state storage, of the distributed ledger. For example, a distributed ledger may support state, e.g., blockchain transactions such as in Ethereum. Typically, smart contract are stateful. One, or more, or all inputs of computation 221 may be read from state storage instead of being given as inputs in the initiation, e.g., initiation transaction. The output(s) of computation 221 are stored on the distributed ledger, and likewise one, or more, or all outputs may be state storage.

In the context of distributed ledgers, such as Ethereum, the term 'state' refers to the current status of all data within the ledger at any given time. For example, the state may include the storage of smart contracts. Data stored in the state may be used to determine the outcomes of computations and transactions. The state may be constructed by a node by executing all transactions recorded on the distributed ledger up to the current point in time; once constructed a node may keep track of the state by updating it as needed, e.g., due to smart contract executions.

When a smart contract is executed, inputs to the computation may be retrieved from the current state of the distributed ledger. Similarly, the results of the computation can be stored back into the state, updating the state accordingly. In an embodiment both input handles and output handles may be stored in the state of a distributed ledger.

Additionally or alternatively, inputs and outputs can also be stored in individual transactions. A transaction in a distributed ledger is a record of an operation or a series of operations that modify the state. By storing inputs and outputs in transactions, it is possible to create an audit trail of all changes made to the state over time. State and transactions may be combined, for example one or more inputs may be obtained from a transaction while one or more inputs may be obtained from the state.

Computation system 103 further comprises a distributed ledger computation node 110. Computation node 110 is also configured to perform computation 221, and more general may execute smart contracts if they are initiated, or part thereof. Indeed, computation node 110 may perform the same functions as node 120, e.g., it may be a full node, or a miner. For example, computation node 110 may generate new blocks for the distributed ledger, participate in the consensus algorithm of the distributed ledger, and so on. This is not necessary, and computation node 110 could be limited to only performing computations involving handles, e.g., computation 221.

It is convenient if computation node 110 at least has a copy of the full distributed ledger, and verifies the distributed ledger. This is not strictly necessary; for example, in an embodiment, a computation node 110 may work with a full node and receive only the information from the distributed ledger that is necessary for the work of computation node 110, possibly together with cryptographic proofs that said information is correct.

**Symbolic computation**

Symbolic computation is used both by node 120 and computation node 110. Indeed, both node 120 and node 110 may have a smart contract execution part 115 which executes smart contracts, and in particular computation 221.

Several types of input values are possible for computation 221: plaintext data, e.g., values, and one or more handles referencing data. If an operation uses only plain data as input, then it can be conventionally computed, but as soon as one of the inputs is a handle, then symbolic execution is used. The data referenced by a handle may be stored in a database 160; although at the moment a symbolic computation takes place this may not yet be the case, e.g., if a handle is an output of an earlier computation, but the corresponding data has not yet been computed by computation node 110 and stored in database 160. Indeed, we can distinguish at least two types of handles: input handles, which refer to data stored in database 160 earlier, in particular, data stored in database 160 associated with the input handle, e.g., by a client device 130; and output handles, which refer to data computed by a computation, e.g., computation 221. At some point the output handle and corresponding data will be stored in database 160, though there may be a small delay before this is done. Typically, output handles refer to outputs of the computation 221, but intermediate results may also be assigned a handle and registered in database 160.

To perform a symbolic computation for a computation that has at least one input which is represented as a handle, a node may symbolically execute a series of operations. For each operation, a new handle may be computed from the operation and the inputs. For a computation like computation 221 which uses handles for at least some of its inputs, at least one output of the computation is symbolically represented as an output handle referencing the computation result. There may be multiple outputs. One or more of the multiple outputs may be symbolically represented by a handle, while some outputs may even be plain data, e.g., if said plain output only depends on plain inputs.

The output(s) of computation 221 are stored on the distributed ledger, e.g., in a block of the distributed ledger, and/or in a state storage of the distributed ledger. The stored result includes a handle, e.g., an output handle if the computation is symbolic, or in part symbolic.

The data that corresponds to a handle which is used in a symbolic computation is typically not available to a node that executes the symbolic computation only, e.g., not to node 120. Node 110 does obtain the data that corresponds to a handle which is used in a symbolic computation so that the actual computation can be performed. Note however, that the data corresponding to a handle may well be encrypted, so that even node 110 gains access to the encrypted data corresponding to the handle but not to the plain data corresponding to the handle.

Typically, the corresponding data is stored in an external database 160. For example, in an embodiment at least one input to computation 221 is represented as a handle, and the corresponding data is not available to node 120, in particular the corresponding data is not stored on the distributed ledger. The external database 160 could itself be a distributed ledger, possibly even the same distributed ledger 210 on which the smart contract is stored. This would still be advantageous, since computationally intensive computations, e.g., FHE computations, can be done off-chain.

Computing a new handle in symbolic computation may be done by computing a new handle for the result of each of the operations in computation 221. Some of the computed handles may be for intermediate results, some may correspond to an output. It is possible, but not necessary to store all of the handle-data correspondences, but in an embodiment, handles and corresponding data are stored which are outputs, e.g., output handles. An operation result may be denoted as an output handle either implicitly, e.g., because the handle is a function result, or explicitly, e.g., with a directive or tag in the smart contract.

A handle representing the result of an operation may be computed from at least an identifier representing the operation, the handles received as input and the optional actual inputs. For example, a function may be applied to this data, e.g., a one-way function, in particular a cryptographic one-way function, such as sha-2, keccak256 and so on.

For example, to deterministically produce a result handle given inputs and the operation itself, one may compute New_handle = hash(domain_seperator, Operation_type, input1, input2, ..., inputN).

Note that inputs can either be handles or plaintext values. In this example, hash is a cryptographic, one-way function, e.g., Keccak256, which is, e.g., applied to the concatenation; preferably a secure concatenation is used. The domain_seperator is an optional value that may be used to ensure input handles and result handles are different. For example, to compute result handles the domain_seperator may have a different value than to compute input handles, e.g., 2 for the former, and 1 for the latter. For example, to compute a handle for the sum of two integers, which are only available as a handle 1 and handle2, one may compute

keccak256(2, Operation_sum, handle1, handle2). Operation_sum could be a value indicating the sum operation from an enumeration of all possible operations. In particular, the operation could be an FHE operation if the handles reference encrypted data.

In an embodiment, computation 221 is encoded as a sequence of operations, in the form of a branchless program, in particular computation 221 may exclude conditional branches depending on a value of handle data. Branchless is also sometimes called Straight line program. Note that strict straight line is not necessary, for example, computation 221 may comprise conditional branches or loops depending only on plain inputs.

Note, that any computation may be converted into a straight line program using conditional assignment operations. In particular, the cmux operation produces an output depending on a condition. For example, cmux(x, a, b) equals a if x is true but b if x is not true. Cmux operations are supported by FHE schemes as well.

For example, in a straight line programs, both the true-value output and the false-value output are typically computed, and then a selection is made

Note, that the ability for symbolic computation may be entirely programmed into the smart contract. Although it is possible to modify node 120 to support symbolic execution, this is not needed. In fact this is advantageous, as it allows embodiments to run on conventional distributed ledgers.

**Actual computation.** Distributed ledger computation node 110 is configured to perform the symbolic execution of computation 221, but also to perform an actual execution of the computation, e.g., in an actual computation part 116. To do so, computation node 110 obtains the one or more inputs to the computation, including obtaining the at least one input symbolically represented by the input handle in the smart contract execution from a database 160. Database 160 associates the input handle and the input. If there are plain inputs to computation 221, they may be obtained from distributed ledger 210.

Having collected the actual values for the computation, computation node 110 is now in a position to perform computation 221, not symbolically but actual. As a result, computation node 110 will obtain the actual outcome of the computation. Computation node 110 also has the corresponding handle for the computation, e.g., from the symbolic computation that node 110 performed. Computation node 110 will now store the computation result in the database, wherein the database associates the output handle of the symbolic computation with the output of the actual computation.

For example, suppose database 160 associates handle1 with the value 123 and handle2 with the value 234. During symbolic computation, an output handle may be computed, e.g., as handle3=hash(domain_seperator, operation_type_addition, handle1, handle2). Handle handle3 may be stored in distributed ledger, e.g., by node 120 or possibly node 110. Node 110 does more, it will also retrieve the values 123 and 234, compute the sum 357, and store the tuple (handle3, 357) in database 160, thus associating the new handle with the value 357. A later computation, possibly in a different smart contract can now refer to handle handle3, and node 110 will be able to compute with it, as the corresponding value can be retrieved from database 160.

Interestingly, the actual computation may be optimized in ways which may not be suitable for a smart contract. For example, the actual computation may be optimized for parallel execution. Optimizing for parallel execution may extend beyond one operation at a time. For example, optimizing the computation may comprise optimizing a computation graph corresponding to the entire computation.

**Encrypted data**

In particularly advantageous embodiments, the data stored in database 160 is encrypted. Handles referencing data, reference encrypted data. For the symbolic execution this makes no difference. New handles can be computed in exactly the same way since the corresponding data is not itself used. To perform the actual computation corresponding to a symbolic execution this does make a difference since conventionally one cannot compute directly with encrypted values. Accordingly, fully homomorphic encryption (FHE) is used to encrypt data, and computation node 110 uses FHE operations on the values. As a result, computation node 110 will compute new encrypted data corresponding to the new handle, and will store the new handle together with the corresponding encrypted data.

Continuing our example above, consider database 160 storing encrypted data E1=encryption of 123, and encrypted data E2=encryption of 234. Database 160 associates handle1 with E1 and handle2 with E2, e.g., it may store the tuples (handle1, E1), (handle2, E2), etc. The symbolic computation will still produce the same handle3. However, node 110 now retrieves E1 and E2, and adds them using an FHE add operation. Thus resulting in an encryption E3 of the value 357. The database will then associate handle3 with E3.

For example, data may be encrypted with a public key, wherein the corresponding private key is not available during the performing of the actual execution of the computation. The private key is not needed by node 110, and preferably is not available to it.

A potential complication may arise if the program allows errors to occur. For example, an input may be incorrect, out of range, or not associated with the correct cryptographic proofs (if such are used). In this case, the offending value may be replaced by a default value, or an encryption of a default value, or handle to a default value, e.g., 0.

For database 160 there are various possibilities. For example, database 160 may be a local database to computation node 110. This option could be used, for example, if database 160 is not encrypted, yet still some confidentiality needs to be retained. The local database may be accessible by only a selected set of devices which have access, e.g., only computation node 110. For example, the local database may be protected using the security provided by a Trusted Execution Environment (TEE), e.g., from within the computation node 110.

Database 160 may be public, in which case, at least for confidential data, the data may be encrypted. Database 160 may be implemented as a conventional database, but may also be implemented as a distributed ledger; possibly the same ledger as used to stored contract 220. For example, the database may have a public data availability layer.

Computation system 103 may comprise a client device 130. Client device 130 may be used to initiate computation 221, e.g., by sending a transaction to the distributed ledger. This will typically use an intermediary, such as a node, e.g., full node, e.g., node 120. Possibly, node 110 could act as an interface to distributed ledger 210 as well.

Client device 130 may also be used to store value in database 160. For example, in the example above, to add handle1 and handle2, the corresponding values need to be stored in database 160. Client device 130 may store input data, e.g., a value, in database 160 wherein the input is associated with the handle. The handle may be determined by client device 130 itself. This could be done by having the handle chosen by the client, e.g., through a random selection, for example, the handle may be a globally unique identifier (GUID). Preferably, a mechanism is used that avoids that the client device can select a handle, possibly maliciously, that is equal to an existing handle. In an embodiment, determining the handle by the client device 130 comprises deriving the handle from the input data, e.g., using a cryptographic hash function. The handle may be determined by computation node 110 and/or database 160 and returned to client device 130.

The data being stored may be encrypted, e.g., FHE encrypted.

Storing in the database may be done using an interface to the database, e.g., an API, RPC, or the like. The interface may be provided by computation node 110, but this is not necessary, another server may perform this task, e.g., a database server.

After storing the handle may be used in a computation, e.g., used in an initiating transaction, and computation node 110 will be able to retrieve the corresponding data, possibly in encrypted format. Encrypting the data will typically be done by client device 130 itself, but could also be performed by database 160.

In an embodiment, in return from storing the data and handle, client device 130 receives a signature over at least the handle. The signature may be computed by node 110 or the database server. In an embodiment, the signature is included in an initiating transaction that uses the handle, and verified by the smart contract, e.g., in the smart contract executing part. In an embodiment, the signature may further be computed over the contract address that the client wishes to send a transaction to and/or the user address.

For example, when storing E1 and handle1 in database 160, client device 130 may receive a signature 1. In an initiating transaction including handle 1, also signature 1 may be included so that the smart contract can verify that the input data is registered in database 160.

As another improvement, client device 130 provides the data in encrypted form to database 160 together with a corresponding zero-knowledge proof of knowledge (ZKPoK) for the data. A zero-knowledge proof of knowledge (ZKPoK) is a cryptographic method by which one party (the prover) can demonstrate to another party (the verifier) that they know a specific piece of information (e.g., a secret value) without revealing the information itself. In this case, the zero-knowledge proof of knowledge is a proof, that client device 130 knows which value the encrypted data represents. Database 160, e.g., the database server of node 110, may verify the zero-knowledge proof of knowledge when storing the input in the database, and reject it if it does not verify.

The computation of the handle, e.g., by the client device or the computation node could include the zero-knowledge proof of knowledge in addition to the encrypted input data, e.g., by computing a hash function over the ZKPoK as well as over encrypted input data. Computing the handle may include further data, e.g., to link the handle to further entities, e.g., a contract address and/or user address.

Typically, the zero-knowledge proof of knowledge will be verified when storing the input in the database, but this could be delayed until the data is actually needed to perform the actual computation 221.

We continue our example of confidential computation, in the context of confidential token transferring, to show how an embodiment may implement a basic cryptocurrency. Note that the technology is agnostic as to the content of the computation, and may be applied to any computation that is desired on a distributed ledger, whether confidential or not. A cryptocurrency may be used to control access to a technical resource.

A cryptocurrency smart contract supports a function to transfer a number of tokens from a first account to a second account. In an embodiment, the contract maintains a mapping between addresses, and a handle. The handle references an encrypted amount of tokens. For example, the tokens may be ERC20 tokens. See, for example, Fabian Vogelsteller, Vitalik Buterin, "ERC-20: Token Standard," Ethereum Improvement Proposals, no. 20, November 2015; included herein by reference.

Suppose a first user has a tokens, represented by handle1; that is an encryption of the number a is stored in database 160 and referenced with handle 1. Suppose a second user has b tokens, represented by handle2; that is an encryption of the number b is stored in database 160 and referenced with handle2.

Suppose user 1 calls the transfer function to transfer x tokens from his own account to the account of user 2. First user 1 encrypts the number x, and inserts it into database 160. The encryption may use the FHE public key of a key pair known to the key management service. Preferably, user 1 also generates a zkpok locally as its client device is doing the encryption. In an embodiment, a handle for x is locally computed by the client device (handlex). The handle may be a hash over the encrypted data, and optionally also over the zkpok. If the handle is computed from using a hash function, then computation node 110 and/or database 160 can also compute the handle locally.

Inserting into database 160 may be done by computation node 110. Computation node 110 signs the handle and returns the signature S_cp to the client device, and enters into database 160. Optionally, the signature could also include a user address and/or contract address. Database maps handle to the encrypted value, in this case an encryption of x.

The user's client device has the handle, and sends a transaction to the blockchain. This may be a conventional transaction, typically signed by the user's key associated with the blockchain. The transaction instructs to transfer x (represented as a handle) to user 2. Now the contract is executed. Any node, e.g., node 120 will do so only symbolically, but node 110 will also do it actually.

The contract looks up the sender and receiver and handles for their amounts of tokens. The contract has to deduct x from user 1's amount. The contract is preferably a straight line program. The program computes two sets of handles, and computes the output handles as

$$\text{handle\_a1} = \text{handle for a-x,}$$

$$handle\_b1 = handle\ for\ b+x$$

$$new\_handle\_a = cmux(x <= a, handle\_a1, handle1)$$

$$new\_handle\_b = cmux(x <= a, handle\_b1, handle2)$$

The subtraction and addition operations in a-x, and b+x each produce a new handle as they are computed symbolically. For example, one might have handle_a1 = hash (2, subtract_id, handle1, handlex).

Also the two cmux operations produce a new handle. Now the smart contract can associate user 1 with a new handle for its amount of tokens, new_handle_a, and associate user 2 with a new handle for its amount of tokens, new_handle_b.

These computations can be performed by any node. The updated handles for users_1 and 2 are written on the distributed ledger.

The computation node 110, will also perform an actual computation. To do this, the encrypted values corresponding to handle1, handle2, and handlex are retrieved. The contract is now executed on the encrypted values, rather than symbolically. As a result, an encrypted amount is obtained for user 1 and user 2, which can be associated with their new handles in database 160.

When the original cryptocurrency is created, all the tokens may be minted to a particular address, or multiple addresses, and from there on they will be transferred to other addresses. Each time, the new amounts get handles which are associated with addresses in the contracts. The handles are associated with ciphertext in the database 160.

Confidential computation on a distributed ledger, e.g., blockchain, has various applications.

For example, in an embodiment, the technology is used in healthcare data management. A confidential contract facilitates sharing of patient data among stakeholders while preserving confidentiality. For instance, a hospital could securely store encrypted patient records on the distributed ledger, allowing authorized healthcare professionals to access and analyze data, e.g., for medical research and personalized healthcare without compromising privacy. For example, a confidential computation may compute statistics over the data in the ledger, e.g., averages, etc. For example, a confidential computation may train a numerical model, e.g., a linear regression, a machine learning model, etc. Instead of numerical medical data, an embodiment may be applied to other numerical data.

For example, in an embodiment, the technology is used in secure voting systems. Governments can implement distributed ledger-based voting systems, storing encrypted ballots for anonymous counting and verification, enhancing trust in democratic processes. Users send a transaction with an anonymous vote. The contract verifies the vote and counts them.

For example, in an embodiment, the technology is used for token management to regulate access to resources over a computer network, such as high-performance computation or bandwidth allocation. Organizations can securely allocate and manage tokens on the distributed ledger, ensuring fair distribution while protecting sensitive information. For example, tokens may be transferred from one project that currently does not need the resource, e.g., high-performance computation, to another project.

Confidential smart contracts have a number of use cases such as:

Confidential token transfer
- Confidential blind auction
- Confidential voting
- On-chain secure randomness
- On-chain gaming
- Confidential Decentralized Identifier (DID)
- Confidential tokenization

It is noted that an advantageous method and/or system may not require input to the computation. For example, such a computation may be used to compute randomness. One example could be to deal a hand in poker, e.g., sample randomness instead of accepting an input.

A method for executing computations associated with a distributed ledger, the distributed ledger storing a smart contract, the smart contract encoding a predefined computation, the computation producing a computation result, the method comprising:

- monitoring transactions on the distributed ledger for activations of the computation,
- upon detecting an activation of the computation

- performing a smart contract execution, comprising

  - symbolically performing the computation, wherein at least one output of the computation is symbolically represented as an output handle referencing the computation result,
  - storing the output handle on the distributed ledger,

- performing an actual execution of the computation, comprising

  - performing an actual execution of the computation, obtaining a corresponding computation result reflecting an actual outcome of the computation,
  - storing the computation result in the database, wherein the database associates the output handle with the computation result.

It is noted that the above method may be combined with any additional feature described herein, in particular in the dependent claims.

In an embodiment, the computation, both symbolic and actual support a pseudorandom number generator. The pseudorandom may be stateless such that generating the next encrypted random value requires a seed that may be implemented as a plaintext counter in the smart contract computation. That is, even if the smart contract operates on encrypted data, and in particular on encrypted randomly generated data, then still the input to the random number generator, e.g., a seed or state, may be unencrypted. As a consequence the state does not need to be represented by a handle, but can be used in plain.

For example, the state may comprise a plaintext counter value that may be incremented on every random number generation as part of symbolic execution. Doing that means we can run symbolic execution sequentially, and run the actual FHE PRF in the coprocessor in parallel or later, to generate the actual encrypted random values. There is no need to persist any state related to random number generation in computation node 110 or database 160 as the state is not encrypted and can be stored on the distributed ledger, e.g., together with any handles or other non-encrypted data.

Using the computation node 110 can produce encrypted random results deterministically.

In an embodiment, random and encrypted values are generated in FHE, e.g. the PRF itself runs in FHE on computation node 110, while symbolically, e.g., on node 120, a handle is generated that represented the random value. A smart contract may call a random number generator and receive back a handle to an encrypted random value. The state, e.g., a seed, may be updated, but his can be done in plain; that is the state may be received in plain and remain plain after updating.

The reason that confidential random number generation may use a non-encrypted state is that the computation node has access to key material needed to perform FHE computations. In particular, a server-key/client-key pair may be generated. In which the server-key is public and may be used to perform FHE computations, but not for decryptions, while the client-key allows decryption. The client-key may be known to client device 130, or to the KMS service. The random number generator relies on the plain state, and the server-key and produces an encrypted random value. What the random value is can only be obtained with access to the client-key. One other way that this could be implemented, is to have an external service, e.g., the KMS, that produces encrypted randomness given a plaintext state.

Even if an attacker replays random number generation using the server_key and the seeds used, as they are both public, they would not be able to decrypt the generated random values. Only when a decryption or re-encryption is requested on-chain will the KMS execute the operation and, potentially, reveal a random value.

In an embodiment, the client-key is stored in the KMS. In an embodiment, the client-key is not available to any single party, e.g., using a distributed KMS having multiple KMS servers.

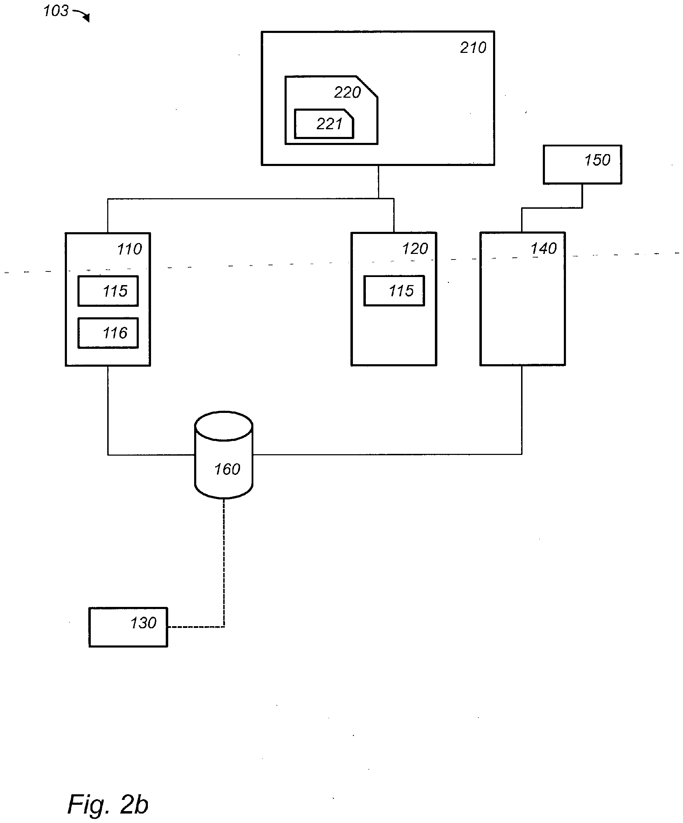

**Figure 2b** schematically shows an example of an embodiment of a computation system comprising an optional key management service server 140 to implement a key management service. Alternatively, the key management service could be implemented by a distributed network to increase confidence in the function.

The key management service is optional. Even if encryption is used, e.g., a confidential smart contract, a user could use its own keys therefor, and could decrypt value retrieved from database 160 using its own private key.

The key management service allows other ways to do this. For example, data may be encrypted by a public key, wherein the corresponding private key is available to a key management service (KMS), e.g., KMS server 140. For example, the key management service, may be configured for

- receiving as input a handle and obtaining from the database the corresponding encrypted data,
- decrypting the encrypted data using the private key, and/or re-encrypting the encrypted data; note that re-encrypting the encrypted data preferably does not comprise decrypting the encrypted data, although that is a possibility.
- providing the decrypted data and/or re-encrypted data.

For example, the decrypted data and/or re-encrypted data may be stored in the distributed ledger or may be provided to client device 130, etc.

The key management service may use an access control mechanism, e.g., access control mechanism 150. The access control mechanism stores a mapping indicating who is authorized to decrypt and/or re-encrypt the encrypted data corresponding a particular handle. The access control may also be used to determine if a contract is allowed to execute computation with a given handle.

In an embodiment, access control mechanism 150 is stored on the distributed ledger. Relevant parts of access control mechanism are given to the KMS, e.g., on each request, together with an inclusion proof that proves that the part is really a part of the ACL stored on the ledger.

Re-encryption could involve an explicit decryption, but this is not necessary. In that sense, on re-encryption, the KMS does not learn the plaintext value, only the re-encrypted.

For example, re-encryption may convert a value from one encryption, e.g. FHE, to another one, e.g., RSA, without decrypting the value.

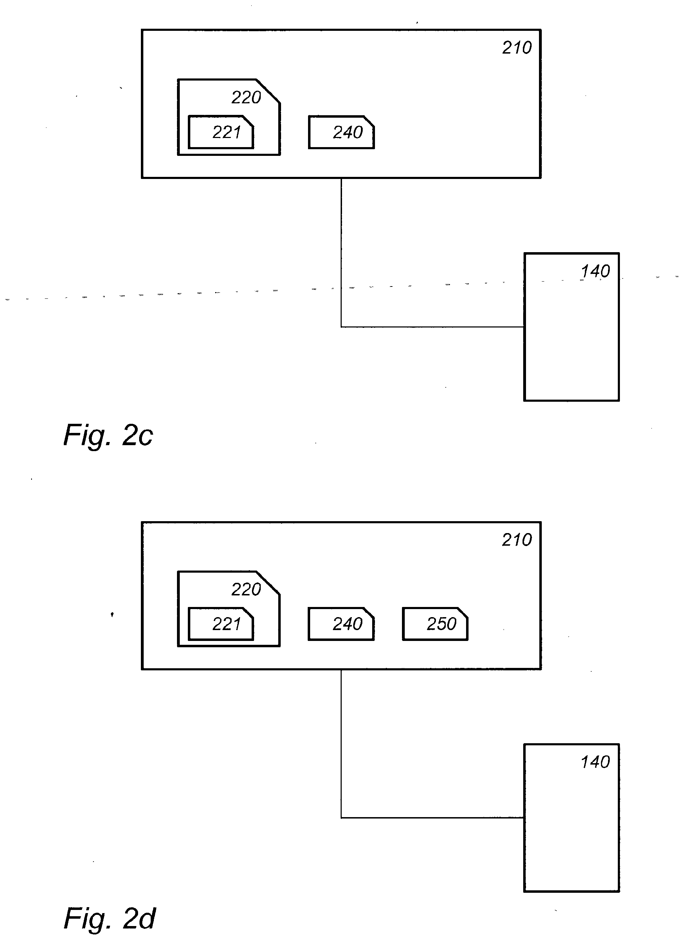

**Figure 2c** schematically shows an example of a detail of an embodiment of a computation system. Figure 2c may be used in combination with figure 2a or 2b. Figure 2c shows KMS smart contract 240 cooperating with KMS server 140. KMS smart contract 240 may implement a function to decrypt and/or re-encrypt data. KMS server 140 may monitor this function and if it is triggered perform the decryption and/or re-encryption data. KMS 140 may be a full node, e.g., like node 110 or 120. KMS 140 may also be implemented without the full ledger, in which case, KMS 140 is only provided with the relevant information, along with proof that KMS contract 240 really did trigger.

KMS contract may be a smart contract providing services to multiple other contracts. For example, multiple smart contracts like contract 220 may contain confidential computations, and may call a function of KMS contract 240.

For example, in an embodiment, if the decrypt function of the KMS contract initiated to decrypt the data corresponding to a handle, then decryption may be implemented as follows

- by KMS contract 240, storing the handle on the distributed ledge in a list for decryption,

  - by KMS contract 240, emitting a decryption event on the distributed ledger
  - by Oracle service 350, monitoring transactions on the distributed ledger for the decryption event, and upon detecting the decryption event, by KMS contract 140,
  - obtaining a proof that the handle is stored in the list for decryption,
  - sending the handle, and proof to the KMS,
  - providing the decrypted value on the distributed ledger.

The decrypted value may be verified as coming come from the KMS, e.g., through a signature, which may also be placed on the distributed ledger.

In an embodiment, the key management service (KMS) is implemented as a distributed system of multiple KMS devices. Each device holding a share of a private key. Each KMS devices may be activated to compute a share of a decryption or re-encryption. For example, an oracle device may activate a distributed KMS device in this way. There may be more than one oracle device. Alternatively, the distributed KMS devices may monitor the distributed ledger themselves, e.g., they may be full nodes. There could a mix of distributed KMS devices working with an oracle and implemented as a full node. The decryption or re-encryption shares are sent to a central device, e.g., client device 130 or to another node, e.g., computation node 110 or node 120 for a decryption. The shares may then be recombined to obtain the decryption or re-encryption. The decryption or re-encryption may then be placed on the distributed ledger if so desired. This has the advantage that no single KMS device needs to be trusted. In this embodiment, all data could be encrypted with the same public key, e.g., the public key corresponding to the private shares. Multiple public keys and corresponding sets of shares could be used. A user may register an encrypted data, encrypted with the public key corresponding to the shares of the multiple KMS device.

**Figure 2d** schematically shows an example of a detail of an embodiment of a computation system. Figure 2d is similar to figure 2c, but the access control mechanism is implemented as an access control smart contract 250. The access control smart contract maps addresses on the distributed ledger, e.g., a user address and/or a smart contract address, to handles indicating if the address is allowed to decrypt and/or re-encrypt the handle. If a decryption or re-encryption is triggered, e.g., by KMS contract 240, then ACL 250 may be consulted to verify if decryption and/or re-encryption is allowed.

Access control contract 250 may be a smart contract providing services to multiple other contracts. In particular, multiple smart contracts like contract 220 may contain confidential computations, and may call a function of contract 250, e.g., to register an address and a handle, to indicate that the address is authorized to decrypt/re-encrypt the handle's data. KMS contract 240 may call access control contract 250 to verify if an address is authorized.

Decryption may be done as follows.

A decrypt call may come from a contract on the blockchain. For example, a call may be made to the KMS contract to do the decryption. Note, if a handle's data is decrypted in this embodiment, it becomes publicly visible. For example, a use case may be a blind auction. In the blind auction, at the end all the bids remain encrypted. At the end you want to reveal the highest bid. This can be done by decryption, making the value public. For example, the decrypt call may be made by the auction contract, or by an owner of the auction. For example, an operator of the smart contract, e.g., its creator, knows the auction has ended and may want to reveal the final value of the auction but not the bids.

For example, a developer of the blind auction contract may call the decrypt function in the KMS contract. The initiating transaction for the decryption may comprise the handle of the auction result, and optionally a call back function. For example, an event V may be emitted, which may contain the handle and callback.

An oracle may monitor the distributed ledger for this event. If the oracle sees the event, it fetches a proof P_d that this handle is actually to be decrypted. The oracle proof is optional; for example, if the KMS server is a full node, no convincing is needed that the handle is to be decrypted. For example, proof P_d could be Merkle proof from the storage layer of the blockchain, that a handle H is persisted. P_d can be a proof of event V as well. Obtaining the proof P_d may be calls, e.g., networking calls, e.g., RPC calls, to any full node on the network, e.g., node 120 or node 110. This may be done off chain, no transaction being necessary.

The proof P_d, handle and corresponding ciphertext is sent to the KMS server (or KMS network if a distributed KMS is used). The KMS server verifies proof P_d. If P_d verifies, the KMS performs the decryption and returns to the oracle the plaintext value N, along with a signature S_m on N. The Oracle service sends a transaction to the KMS contract to verify S_m, then dispatch the callback. The callback could be to any contract that needs the decryption.

Re-encryption may be done as follows. Re-encryption has the advantage that a user gains access to their computation results, without making the computation results public. For example, a user may check their token balance by re-encrypting the encrypted data referenced by a handle indicating token balance.

This may proceed as follows. A user, e.g., a user device, creates a public/private key pair, and keeps the private key secret. This does not have to be an FHE key pair, but could use any asymmetric cryptography, e.g., ECDSA. The user signs the public key K, and the handle to be re-encrypted H, with a private key of the user to obtain signature S_u. The private key used for signing is any private key that is associated with the user, e.g., its Ethereum secret key. The values, H, K, and S_u are sent to a gateway.

The gateway obtains a proof P_r that handle H is allowed to be re encrypted. This may use the ACL contract, or any other authorization mechanism. For example, the ACL contract may maintain a set of (address, hand) pairs. If the user address and handle pair is in the ACL set then it has full access, and the ACL contract may certify this in a proof. A call is then made to the KMS for re-encryption, e.g., using a network call, e.g., an RCP call.

Below several further optional refinements, details, and embodiments are illustrated.

Below embodiments are shown implementing a blockchain coprocessor that utilizes confidential computation and allows for writing fully-programmable confidential smart contracts directly on the blockchain. Several advantages are obtained:

- Contract bytecode is fully stored on-chain.
- No programs are stored off-chain.
- No additional tools (compilers, services, etc.) are needed to deploy confidential smart contracts.
- No changes are needed to the blockchain the confidential coprocessor is deployed for.
- Confidential smart contracts can be audited on-chain.
- Full programmability of confidentiality for both inputs and outputs is offered, such that developers can decide when to reveal data programmatically.
- Computation can be carried out in many separate steps fully off-chain, without waiting for results on-chain.

With RISC Zero's solution, the program is stored off-chain and is written in a programming language that is different from the one used to write the smart contract. Embodiments solve that problem by storing smart contracts fully on-chain, without requiring off-chain programs. Furthermore, once computation is complete on the RISC Zero's ZK coprocessor, the result is put back on the blockchain, without the ability to store intermediate results off-chain for future computation. Embodiments solve this problem by allowing intermediate results to be stored off-chain, allowing for computation with an arbitrary number of steps.

Fhenix's and EigenLayer's FHE coprocessor solution provides confidentiality for inputs only as results are decrypted before being put back on the blockchain as part of the flow. Embodiments overcome that problem by storing result ciphertexts off chain and allowing for their use at a later point in time in smart contracts on the blockchain. Moreover, in an embodiment, developers decide programmatically when a decryption happens, by explicitly invoking it rather than it being part of the coprocessor execution flow.

To overcome the above problems, we use a technique called "symbolic execution" that allows us to store ciphertexts off-chain and refer to them in smart contracts via symbolic values in the form of ciphertext handles. This is advantageous, because ciphertexts are potentially considerably larger in size compared to the plaintext value they encrypt. In an embodiment of a smart contract on the blockchain, constraints on these symbolic values are checked, but their real values are ignored, e.g., the underlying ciphertexts, via symbolic execution. The actual computation on the ciphertexts is done inside the confidential coprocessor according to an embodiment.

Symbolic execution also allows us to implement parallel execution, making our confidential coprocessor work faster and scale better.

Embodiments use **symbolic execution.** It is used to support confidential smart contracts via confidential computation on a new or existing blockchain. Symbolic execution allows for decoupling confidential computation from smart contract execution. Namely, smart contract code runs symbolically on the blockchain and the corresponding confidential computation runs off-chain, on the coprocessor. Decoupling has the following advantages:

- No changes are needed on the blockchain itself or its tooling.
- The method is generic and can be applied to different blockchains.
- Independent confidential computations can be done in parallel even if the blockchain does not support parallel execution.
- Smart contract code remains on-chain, even though confidential computation is executed off-chain.

Following paragraphs serve to introduce how symbolic execution is used in embodiments to implement a confidential blockchain coprocessor.

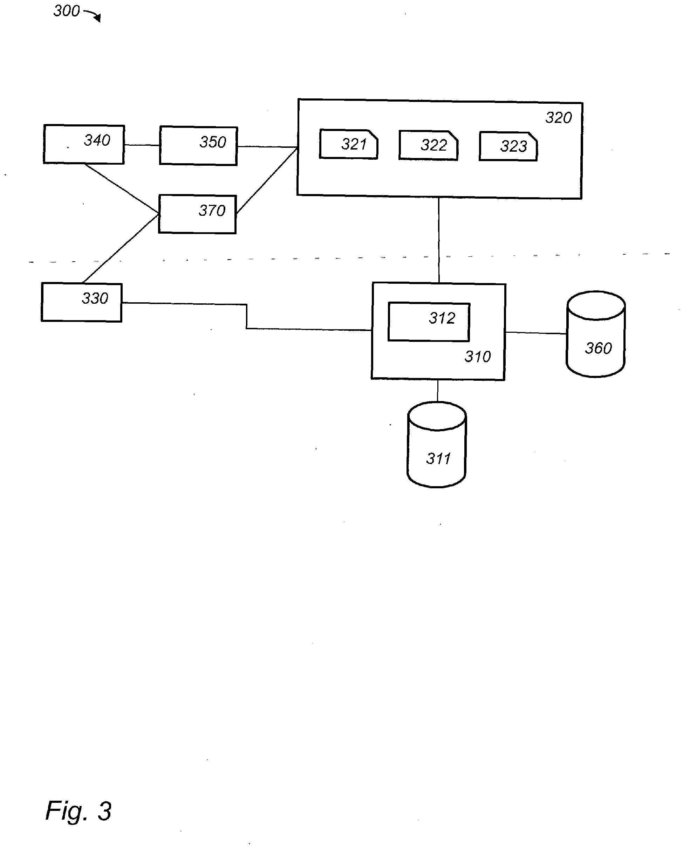

**Figure 3** schematically shows an example of an embodiment of a computation system. Figure 3 shows

| | |
|---|---|
| 310 | coprocessor, e.g., computation node |
| 312 | a full node |
| 320 | Blockchain |
| 321 | Coprocessor contract |
| 322 | ACL contract |
| 323 | KMS contract |
| 330 | User, e.g., client device |
| 340 | KMS |
| 350 | Oracle service |
| 311 | database DB |
| 360 | public data availability layer DA |
| 370 | Gateway |

**Architecture Overview.** In an embodiment, the coprocessor is a full node of the blockchain, executing all blocks and transactions, both plaintext and confidential ones. Figure 3 shows coprocessor 310 with a full node 312. Coprocessor 310 is an example of a computation node. The coprocessor receives blocks and transactions via the blockchain's P2P network.

For example, in an embodiment, one puts on the blockchain: one or more coprocessor contracts, a KMS contract, and an ACL contract. The off-chain components may be configured to use the on-chain contracts. In an embodiment, KMS 340 monitors KMS contracts 323, possibly using an intermediary to avoid maintaining a full node in KMS 340. In an embodiment, coprocessor 310 monitors coprocessor contracts. In an embodiment, all communication between KMS 340 and blockchain 320 goes through Oracle service 350. KMS 340 could be a full node, which would allow one to eliminate a gateway or oracle service. Oracle and Gateway listen for events, fetch information from blockchain explicitly in certain cases.

Gateway 370 may be configured for re-encryptions. For example, a user may trigger re-encryption at gateway 370, which may transport all needed data to the KMS and return the result to the user. Note that both the Oracle Service and the Gateway do not need to be trusted, for example, by utilizing cryptographic proofs and/or signatures to ensure decryptions and re-encryptions are actually requested and executed properly. Gateway 370, though convenient, is not required.

Note, communication between the blockchain and the KMS may be via Oracle 350, without the Gateway 370 being involved. Gateway 370 may be involved, e.g., for communication between the user and the KMS, utilizing data from the distributed ledger. Note that Gateway 370 is not needed for communication between the KMS and the distributed ledger.

Smart contracts, e.g., their bytecode, exist on the blockchain. Smart contracts may be deployed via existing blockchain tools, e.g., clients, languages, compilers, etc. Consequently, there is no need for bridges between the coprocessor and the blockchain in embodiments.

On the blockchain, the following smart contracts may be deployed to implement the confidential coprocessor:

- Coprocessor Contract 321: implements symbolic execution on the blockchain
- ACL Contract 322: an access control list contract that deals with ciphertext permissions
- KMS Contract 323: supports decryptions via the KMS

A Key Management System (KMS) is responsible for managing secret key material used for decryption, and re-encryption. Ciphertexts on the coprocessor may be encrypted under the corresponding public key.

An Oracle Service is responsible for communication between the blockchain and the KMS for decryptions. A Gateway is responsible for re-encryptions. In an embodiment, the Oracle Service and Gateway could be merged into one.

Note that both the Oracle Service and the Gateway do not need to be trusted by using cryptographic proofs and signatures to make sure decryptions and re-encryptions are actually requested and executed properly.

**Off-Chain Ciphertext Storage.** Ciphertexts are potentially significantly larger in size compared to the corresponding plaintext and storing them on the blockchain would be costly. In an embodiment, the ciphertexts are stored off-chain, in a database 360 (DB) and/or database 311 (DA), which may be on the coprocessor. In an embodiment, DA database is an independent entity from the DB, from the coprocessor. Preferably, DA is immutable; Once an insertion is made, it stays. DA is preferably public. DA could be a blockchain. Preferably, after insertion into DA, the insertion is distributed and/or replicated.

Additionally, the ciphertexts are also stored on a public data availability layer (DA) for decryption, re-encryption, auditing purposes and fraud detection. We assume that the DA is honest in the sense that it does not change any data inserted to it and all data that was ever sent to it remains on it and is available for retrieval. If needed, mechanisms for ensuring this are available. The DA and DB database may be combined if desired. One embodiment of this could be to periodically submit state commitments to the distributed ledger, e.g., blockchain, e.g., Ethereum. This may not necessarily prevent data from being lost, but it does prevents the DA from modifying data after the commitment was made.

In smart contracts, developers and users refer to a ciphertext via a symbolic value in the form of a ciphertext handle. A handle is a unique identifier that refers to a single ciphertext. Handles are much smaller in size as compared to ciphertexts - for example, a handle could be 256 bits.

**User Ciphertext Inputs.** Since ciphertexts are not stored on the blockchain, in an embodiment a client device first inserts a ciphertext into the coprocessor's DB before using its corresponding handle in transactions with smart contract calls. Client devices do that via an API call to the coprocessor.

The coprocessor signs the input handle and, potentially further information, e.g., the user address, and returns a signature to the client device. When the handle and the corresponding signature are used in a transaction, the Coprocessor contract verifies that signature in order to avoid using inputs that are unknown to the coprocessor. Furthermore, the signature means the coprocessor commits to that input, allowing for users to use it in case of a future fraud proof if the coprocessor acted maliciously.

Moreover, in order to prohibit malicious users from using ciphertext inputs of other users and eventually decrypting them, in an embodiment, every ciphertext input comes with a zero-knowledge proof of knowledge (ZKPoK). That ensures the sending user knows the plaintext value and actually encrypted it themselves.

Finally, if a ciphertext is an input, the coprocessor could, in an embodiment, verify its ZKPoK on demand, just before using it for computation. That removes a potential bottleneck that would arise if the ZKPoK were to be verified on insertion of the ciphertext, adding latency for users and impacting user experience. Note that, in an embodiment, the ZKPoK is never put on the blockchain and is not verified there. On the other hand, the coprocessor may verify the ZKPoK at the time of insertion. Either option for verifying the ZKPoK may be chosen in an actual implementation.

**Symbolic Execution.** Smart contracts are written such that they operate on symbolic values in the form of ciphertext handles. In an embodiment, a smart contract computation uses symbolic execution. Inputs to confidential operations are handles. Constraints on these handles may be checked, but their values (the underlying ciphertexts) are ignored during symbolic execution. Ciphertexts do not have to be stored on the distributed ledger, though they could be.

On the coprocessor, confidential operations are executed on the ciphertexts the handles refer to. The coprocessor may fetch input ciphertexts from the DB. When a new ciphertext is generated in the coprocessor as a result of a confidential operation, it is inserted into the DB and the DA under a handle that is deterministically generated in the Coprocessor smart contract on the blockchain.

Confidential computation on the coprocessor can be implemented via any privacy-preserving technology. Some examples are FHE, Secure Multi-Party Computation (MPC), Trusted Execution Environment (TEE), Hardware Security Module (HSM), etc.

**Confidential Computation.** Symbolic execution allows one to decouple smart contract execution from confidential computation. In an embodiment, on the coprocessor we execute a smart contract symbolically and collect a list of all confidential operations in a computation graph. The computation graph may then be optimized and a method to execute these operations may be determined, taking data dependencies into account. For example, the determined method may allow, e.g.,

- Running independent operations in parallel.
- Distributing the workload on a compute cluster for optimal performance.

Note that symbolic execution is typically faster than confidential computation.

**Error Handling.** Since symbolic execution in the Coprocessor smart contract on the blockchain does not have the actual ciphertexts and, thus, cannot fail on incorrect ones, preferably the actual confidential operations on the coprocessor cannot fail either. One way to address this issue, is to replace incorrect ciphertexts with trivial encryptions of 0. As an example, an incorrect ciphertext might be one that has an invalid ZKPoK.

Trivial encryptions are deterministic and are, e.g., encryption without randomness. They don't hide the plaintext value.

Using trivial encryptions of 0 does not have an impact on security of the system, because a malicious actor can always input a value of 0 that is correctly encrypted. Furthermore, we assume failures are always deterministic, allowing for anyone observing the behavior of the coprocessor to detect if it used trivial encryptions of 0 correctly.

**Access Control (ACL).** Ciphertexts contain confidential information that users would like to have control over. Therefore, access control is introduced, e.g., in the form of the ACL contract on the blockchain. The ACL contract may contain a set of tuples *(handle, address)* that define which addresses can use a given handle. Access control applies to both confidential computation and decryption/re-encryption of the ciphertext referred to by the handle.

Access control entries can only be added by an address that already has access to the given handle.

Furthermore, the address can be a user address or a smart contract address. Allowing smart contract addresses is useful for composability between contracts: when a caller wants to pass a handle to a callee or when a callee returns a handle to its caller.

**Decryption and Re-encryption.** In an embodiment, confidential computation over encrypted data produces results that can eventually be decrypted to plain data. In an embodiment, two methods are supported for that: decryption and re-encryption. Both may be implemented inside the KMS.

A decryption returns the plaintext from a given handle. It may be implemented in an asynchronous manner - a smart contract requests the decryption and provides a callback function. A decryption event is emitted on the blockchain such that the Oracle Service can be triggered to transport all needed data to the KMS for the decryption. When the decryption is ready on the KMS, the Oracle Service would send a blockchain transaction that calls the callback with the plaintext value.

A re-encryption is similar to decryption, but the result is not the plaintext value. Instead, it is the plaintext value encrypted under a public key encryption scheme, where the user provides the public key. That way, only the user can decrypt the plaintext value with the corresponding secret key. For example, the user may trigger re-encryption at the Gateway, which will transport all needed data to the KMS and also return the result to the user.

Both decryption and re-encryption may be done securely at the KMS. For re-encryption, the plaintext value is never visible to the KMS or any party other than the user that requested it. The KMS itself can be implemented via MPC, TEE, HSM or any other privacy-preserving technology.

**Proof of Decryption/Re-encryption Request.** To preserve confidentiality, a ciphertext may be allowed to be decrypted or re-encrypted by committing that into the KMS or ACL contracts on the blockchain. For the KMS to be convinced, the request for decryption must come with a proof from the ACL contract. Those proofs must be verifiable by the KMS.

**Signature of Correct Decryption/Re-encryption.** The KMS may sign decryptions and re-encryptions such that smart contracts and users, respectively, can verify the result comes from the KMS. That allows us to not put trust in the Oracle Service or the Gateway. We describe an embodiment of the coprocessor that operates on an EVM-like blockchain and utilizes FHE for confidential computation (EVM stands for Ethereum Virtual Machine). It allows for writing confidential smart contracts, e.g., in Solidity and may be shipped with a library for that.

The coprocessor preferably runs as a blockchain full node.

In an embodiment, an EVM-like blockchain has the following characteristics:

- It runs the EVM for smart contract execution.
- Addresses, wallet (or user) signatures and keys use the EVM's standard format.
- It supports writing smart contracts in Solidity, targeting the EVM's bytecode format.
- It supports proofs that a certain value has been committed in a smart contract's storage.
- It supports events for notifying off-chain components.

Preferably the FHE scheme supports: Exact computation on integers as most blockchain use cases need that; Deterministic execution, meaning that if an operation is executed multiple times with the same input ciphertexts, the output ciphertext will always be the same. Furthermore, preferably there is no limit on the number of operations that can be executed on a ciphertext. This is preferred because ciphertexts on the blockchain would be stored and long-lived, with many operations during their lifetime.

Schemes that satisfy above are:

- TFHE, see, e.g., "TFHE: Fast Fully Homomorphic Encryption over the Torus?", by Ilaria Chillotti, et al.
- BGV, see, e.g., "Fully Homomorphic Encryption without Bootstrapping", by Zvika Brakerski, et al.
- BFV, see, e.g., "Somewhat Practical Fully Homomorphic Encryption", by Junfeng Fan and Frederik Vercauteren

All of the above are included herein by reference.

**Handles**

In an embodiment, we use the uint256 type in Solidity to represent a handle, ensuring there is a single unique one that refers to an FHE ciphertext. We construct three types of handles: for inputs, for trivial encryptions and for results of FHE computation. We use the "keccak256" cryptographic hash function for generating handles. We assume the probability of collisions is extremely low, guaranteeing unique handles with high probability.

**Input Handles**

In an embodiment, we define an input handle as,: H = keccak256(1, zkpok, ciphertext)

Here "ciphertext" are the actual ciphertext bytes. We use 1 as a domain separator for input handles to make sure H cannot collide with a different type of handle. As the Keccak is a cryptographic hash, that combination of *(ciphertext, zkpok)* pair has a unique handle H.. Note that the user can compute H themselves prior to using it in a transaction. In an embodiment, a non-interactive zero-knowledge proofs (NIZK) is used for the zero knowledge proof of knowledge. In an embodiment, the handle is computed over just the domain separator and the ciphertext.

**Trivial Encryptions.** Trivial encryption is a way of converting a plaintext value to a ciphertext, without hiding the value. It may be encrypting without randomness. Trivial encryption is deterministic, meaning that a trivial encryption of a particular value always produces the same ciphertext, irrespective of how many times it is called. In an embodiment, we define the handle for a trivially-encrypted ciphertext as: H = keccak256($\theta$, plaintext)

This means there is only one trivially-encrypted ciphertext per plaintext value. We use 0 as a domain separator for trivial encryption handles.

**Result Handles.** In an embodiment, a hash function is used to deterministically produce a result handle given inputs and the operation itself. For example, H = keccak256(2, fhe0peration, input1, input2, ..., inputN)

Note that inputs can either be handles or plaintext values. In an embodiment, we use 2 as a domain separator for result handles.

**DB and DA Schema.** The DB and DA _can be implemented as key-value stores. For both of them, the key would be the handle. It is convenient but not necessary to have both a DB and DA. In an embodiment, the DB and DA store slightly different values.

For the DB, the value may be a pair of *(ciphertext, option(zkpok)).* The zkpok is optional, because it is not relevant for ciphertexts that are results of FHE computation. For the DA, the value may be a tuple of *(ciphertext, optional(zkpok), signature),* where "signature" is a cryptographic signature over the ciphertext and the optional zkpok that is generated by the coprocessor, ensuring it produced that entry.

**Contracts.** The Coprocessor, KMS and ACL contracts may be deployed on the blockchain in standard Solidity. The coprocessor, Oracle Service, Gateway and the KMS are all aware of their addresses.

**Coprocessor Contract.** The Coprocessor Contract implements symbolic execution. Only parts of it are shown below, namely trivial encryption and FHE addition. More data types and more operations are supported, but are left out for brevity.

```
type euint32 is uint256;

contract Coprocessor {
    ACL private constant acl = ACL(aclAddress);
    uint8 private constant opAsEuint = 0;
    uint8 private constant opAdd = 1;

    function isInitialized(euint32 h) public pure returns (bool) {
        return (euint32.unwrap(h) != 0);
    }
```

```
                // Creates e new handle for the plaintext value `v`.
                function newHandle32(uint8 op, uint32 v) private pure returns
    (euint32) {
                        return
    euint32.wrap(uint256(keccak256(abi.encodePacked(uint8(0), op, v))));
                }


                // Creates a new handle for the given input handles `v1` and `v2`.
                function newHandle32(uint8 op, euint32 v1, euint32 v2) private
    pure returns (euint32) {
                        return
    euint32.wrap(uint256(keccak256(abi.encodePacked(uint8(2), op, v1, v2))));
                }


                function asEuint32(uint32 value) public returns (euint32) {
                    euint32 result = newHandle32(opAsEuint, value);
                    acl.allow(result, msg.sender);
                    return result;
                }


                function add(euint32 a, euint32 b) public returns (euint32) {
                    if (!isInitialized(a)) { a = asEuint32(0); }
                    if (!isInitialized(b)) { b = asEuint32(0); }
                    require(acl.allowed(a, msg.sender), "sender doesn't own a on
    add");
                    require(acl.allowed(b, msg.sender), "sender doesn't own b on
    add");
                    euint32 result = newHandle32(opAdd, a, b);
                    acl.allow(result, msg.sender);
                    return result;
                }
            }
```

FHE operations in the Coprocessor contract are carried out symbolically, only on handles. The coprocessor intercepts these operations and does the actual FHE computation off-chain.

The Coprocessor contract may make use of the ACL contract to maintain the invariant that a handle can only be operated on if the caller address (e.g., msg.sender in Solidity) is already allowed. The resulting handle is allowed for the caller address.

Also note that signature S_cp (introduced later) is left out of the code snippet above for brevity.

**ACL Contract.** The ACL contract may contain a set of (handle, address) pairs that define the access control rules. An address may be, e.g., either an Ethereum externally-owned address (EOA) or a contract address. If address A is in the set for handle H, full access is granted to H for A.

Note that a caller must already be allowed to use the ciphertext in order to allow it for another address.

```
contract ACL {
    // A set of (handle, address) pairs.
    // If address A is in the set for handle H, full access is granted
to H for A.
    // Maps keccak256(handle, address) => true/false.
    mapping(bytes32 => bool) private pairs;

    // Allow use of `c` for address `a`.
    // The caller must be allowed to use `c` for allow() to succeed.
If not, allow()         reverts.
    // The Coprocessor contract can always allow.
    function allow(euint32 c, address a) public {
        if (msg.sender != coprocessorAddress) {
            require(allowed(c, msg.sender), "sender doesn't own on
allow");
        }
        bytes32 h = keccak256(abi.encodePacked(c, a));
        pairs[h] = true;
    }

    // Returns true if address `a` is allowed to use `c` and false
otherwise.
    function allowed(euint32 c, address a) public view returns (bool)
{
        bytes32 h = keccak256(abi.encodePacked(c, a));
        return pairs[h];
    }
}
```

**KMS Contract.** The KMS contact may add support for async decryption via the KMS. Users pass in a callback function that is eventually called with the plaintext value. Note that, in an embodiment, the caller of decrypt() must already have access to the ciphertext in the ACL contract for decrypt() to succeed. Also note that code to check the signature S_m from the KMS (described later in the document) and call the callback function is left out for brevity.

```
event Decryption(euint32 c, address cbAddress, bytes4 cbFunc);


struct DecryptionRequest {
    euint32 c;
    address cbAddress;
    bytes4 cbFunc;
}


contract KMS {
    ACL private constant acl = ACL(aclAddress);


    // A counter used to identify requests in `requestedDecryptions`.
    uint256 private nextDecryptionId = 0;


    // Stores requested decryptions.
    // Maps decryption ID => DecryptionRequest.
    mapping(uint256        =>        DecryptionRequest)        private
requestedDecryptions;


    // Decrypt `c` and return the plaintext value in the given callback
function.
    function decrypt(euint32  c,  address  cbAddress,  bytes4  cbFunc)
public {
        require(acl.allowed(c, msg.sender), "sender doesn't own c at
decrypt");
        requestedDecryptions[nextDecryptionId++]                =
DecryptionRequest(c, cbAddress, cbFunc);
        emit Decryption(c, cbAddress, cbFunc);
    }
}
```

**FHE Library.** Coprocessor functionality may be wrapped in an FHE library for easier use. Such an FHE library may be the only entry point that developers need in order to use the coprocessor.

```
library FHE {
    Coprocessor private constant coprocessor = Coprocessor(coprocessorAddress);
    KMS private constant kms = KMS(kmsAddress);
    ACL private constant acl = ACL(aclAddress);

    // Returns a trivial encryption of the given `value`.
    function asEuint32(uint32 value) internal returns (euint32) {
        return coprocessor.asEuint32(value);
    }

    // Adds `a` and `b` homomorphically and returns the encrypted result.
    function add(euint32 a, euint32 b) internal returns (euint32) {
        return coprocessor.add(a, b);
    }

    // Decrypts `c` and provides the result in the given callback function.
    function decrypt(euint32 c, address cbAddress, bytes4 cbFunc) internal {
        kms.decrypt(c, cbAddress, cbFunc);
    }

    // Allow use of `c` for address `a`.
    // The caller must be allowed to use `c` for allow() to succeed - if not, allow() reverts.
    function allow(euint32 c, address a) internal {
        acl.allow(c, a);
    }

    // Returns true if address `a` is allowed to use `c` and false otherwise.
    function allowed(euint32 c, address a) internal view returns (bool) {
        return acl.allowed(c, a);
    }
}
```

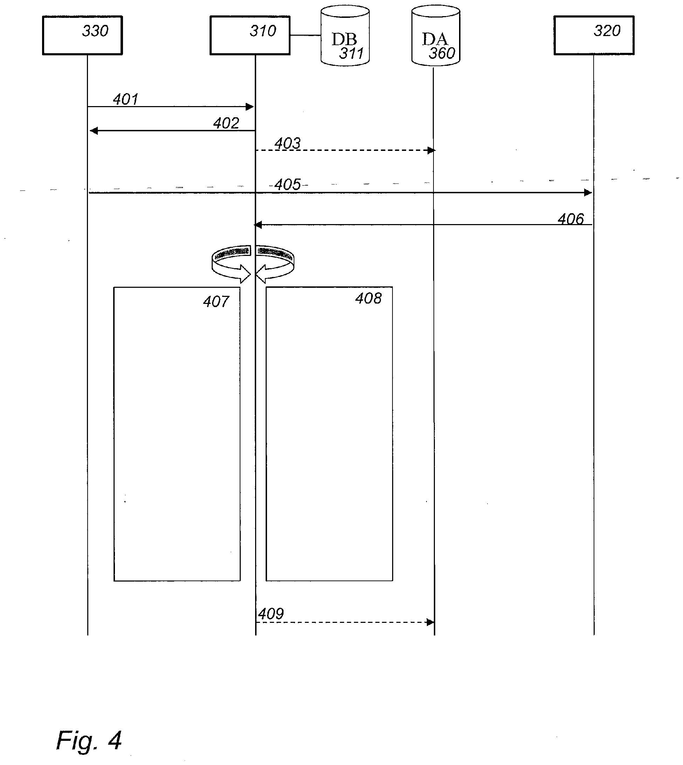

**Figure 4** schematically shows an example of an embodiment of a computation method. The diagram shows how blocks with confidential contracts may be executed via the coprocessor. Note that the coprocessor is preferably also a blockchain full node.

Shown in figure 4 are

330   User, e.g., client device
310   Coprocessor, e.g., computation node

311    database
360    public data availability layer
320    Blockchain

Furthermore 7 processing steps are illustrated

1. From client device 330 to coprocessor 310, insert (zkpok, ciphertext); shown at 401
2. Return from coprocessor 310 to client device 330, Signature S_cp; shown at 402, and
   From coprocessor 310 to database 360, Async insert (zkpok, ciphertext, S_cp); shown at 403
3. From client device 330 to blockchain 320, Send transaction T with handle H = keccak256(1, zkpok, ciphertext) and S_cp; shown at 405
4. From blockchain 320 to coprocessor 310, Block B over P2P; shown at 406

Coprocessor 110 performs two tasks, possibly in parallel: task 5 shown at 407 and task 6 shown at 408.

5. For every transaction in B:

   5.1. Intercept and record call to Coprocessor in list E
   5.2. Pass execution to EVM

6. Async Parallel FHE Execution
6.1. Analyze dependencies in E
6.2. Execute ops in list E in parallel
6.3. Insert result ciphertexts into DB

The result of the FHE Execution will be inserted
From coprocessor 310 to public data availability layer (DA)database 360, Async insert results [(nil, ciphertext, S_cp)]; shown at reference 409 in figure 4.
The flow starts with the user inserting their encrypted input as (zkpok, ciphertext) into the coprocessor's DB (1). The coprocessor is allowed to insert the input into the DA asynchronously, at a later point in time. The coprocessor returns S_cp (2) which is a signature on handle H (where H = keccak256(1, zkpok, ciphertext)) and the user's Ethereum address A, committing that the coprocessor accepts the input. S_cp could be needed in the future for fraud detection if the input is missing from the DA.
Once the user has inserted inputs, they can use them in a transaction T to the blockchain (3) with the handles (H in this case) referring to the inputs. Note that signature S_cp is also sent in transaction T and is verified on the blockchain (in the Coprocessor contract). If S_cp does not verify, T would fail, ensuring the user cannot send unknown handles.
Since the coprocessor is a full node, it eventually receives block B (with T in it) over the P2P network (4) and executes it in (5) and (6). When the coprocessor detects a call to the Coprocessor contract address, it looks into the function selector to determine which FHE operation is to be run (5.1), putting it in list E. Then, the coprocessor passes execution to the EVM for the Coprocessor contract bytecode (5.2).
The coprocessor starts execution of operations in E in (6) in parallel with (5). Firstly, it analyzes dependencies in E (6.1) to find independent operations. Secondly, it executes operations in E (6.2) (in parallel for independent ones). Thirdly, the result ciphertexts are inserted into the DB (6.3) and, eventually, into the DA.
Note that (5) and (6) can also be done across multiple blocks.
Also note that EVM bytecode execution is sequential and only FHE computation is parallelizable. However, nothing prevents from applying a technique for parallelizing EVM execution too. That has been done in other implementations and is out of scope here.

**Correctness.**

One can observe all the transactions on the blockchain. Any party may check the transaction, e.g., by repeating the symbolic execution. Since the coprocessor does the execution off-chain, users need to trust the results it produces are correct. In an embodiment, a verifying device may retrieve ciphertexts from DA using the handles as key, and verify the FHE encrypted operations. In an embodiment, if a discrepancy is found, fraud proofs may be submitted. In an embodiment, the coprocessor 310 may be a distributed system, so that one may trust that the majority of the nodes are honest.
Yet another option is to use so-called verifiable FHE computation. In this case the coprocessor produces a proof of correct computation, which anyone can verify. Such proof are also known as verifiable computation. It is possible to place such a proof on the distributed ledger, though this may not be practical for all applications as FHE computation can be larger, having large computation proofs. However, a database may be used wherein FHE computation proofs may be looked up, e.g., using a distributed transaction identifier as key that corresponds to the actual computation.

For example, the coprocessor may be a decentralized system having multiple nodes, with the requirement that a majority of nodes agree on a result for it to be considered correct. The system could be: a permissioned system such that only a known and trusted set of nodes can participate, or a public system such that financial incentives are used to discourage nodes from misbehaving.

For example, one may require that the coprocessor stakes funds. If it is found to be misbehaving via fraud proofs, some or all of its stake is slashed, incentivizing it to behave honestly.

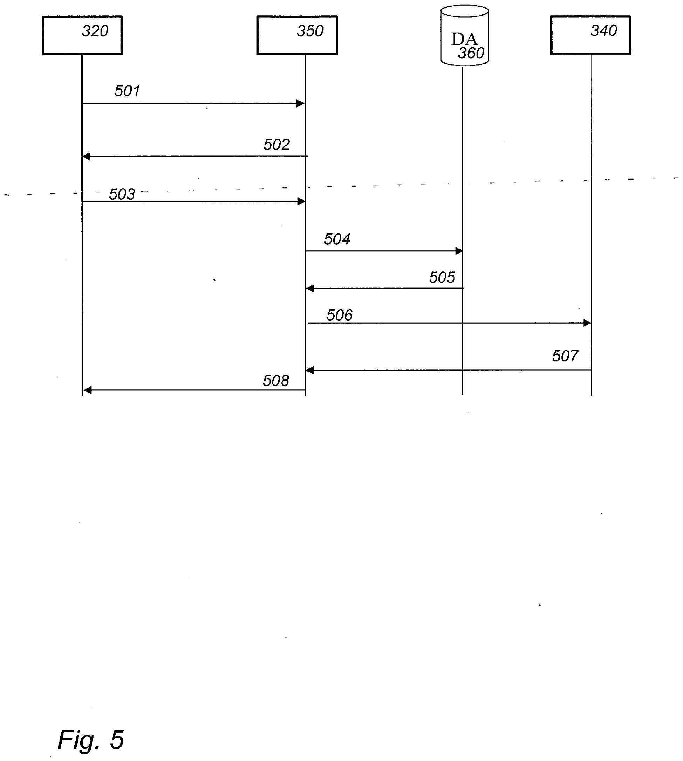

**Decryption.** In an embodiment, decryption may be done without requiring interaction from the coprocessor and it only uses data from the blockchain and the DA. The Oracle Service is the component that drives the flow shown below: **Figure 5** schematically shows an example of an embodiment of a decryption method. Figure 5 describes processing for the

| | |
|---|---|
| 320 | Blockchain |
| 340 | KMS |
| 350 | Oracle service |
| 360 | public data availability layer |

The following processing is shown in figure 5:

1. From blockchain 320 to Oracle Service 350, Decryption event V from KMS.decrypt(); shown at 501
2. From Oracle Service 350 to blockchain 320, Get proof P_d that H is in KMS.requestedDecryptions; shown at 502
3. From blockchain 320 to Oracle Service 350, Proof P_d; shown at 503
4. From Oracle Service 350 to database 360, Get ciphertext C for H; shown at 504
5. From database 360 to Oracle Service 350, Ciphertext C; shown at 505
6. From Oracle Service 350 to KMS 340, Decrypt request with H, C, and proof P_d; shown at 506
7. From KMS 340 to Oracle Service 350, Plaintext value N and signature S_m; shown at 507
8. From Oracle Service 350 to blockchain 320, Send transaction T to callback with N and S_m; shown at 508

Once a smart contract calls FHE.decrypt() (and, in turn, KMS.decrypt()) as (1), an event V is emitted on the blockchain. The decryption is inserted in the "requestedDecryptions" member variable in the KMS contract. Note that insertion of handle H into "requestedDecryptions" is only possible if the caller is already allowed to use H in the ACL contract.

The Oracle Service listens for events from the KMS contract and detects V. It then fetches proof P_d in (2) and (3) that the ciphertext handle H has been requested for decryption in the "requestedDecryptions" member in the KMS contract. P_d is an inclusion proof from the EVM's storage layer.

The Oracle service then fetches the ciphertext C for handle H from the DA (4) and (5). Once complete, it sends C and P_d to the KMS for decryption (6). KMS uses P_d to verify that H is indeed to be decrypted by having been committed on the blockchain. Note that here we rely on the DA to be honest and provide the correct C for the given H. If P_d verifies, the KMS returns the plaintext value N, along with a signature S_m on N (7). Preferably, the handle H should also be included in the signature, so that smart contracts can verify on chain that the KMS decrypted the right value.

Finally, the Oracle Service sends transaction T calling the user-provided callback with the plaintext value N and signature S_m (8). The user-provided callback is typically a function in a smart contract on distributed ledger 320.

Signature S_m may be checked on the blockchain such that only values coming from the KMS are accepted. At that point, N is committed back on the blockchain.

**Re-encryption.** Re-encryption may also be done without requiring interaction from the coprocessor and may be driven by the Gateway.

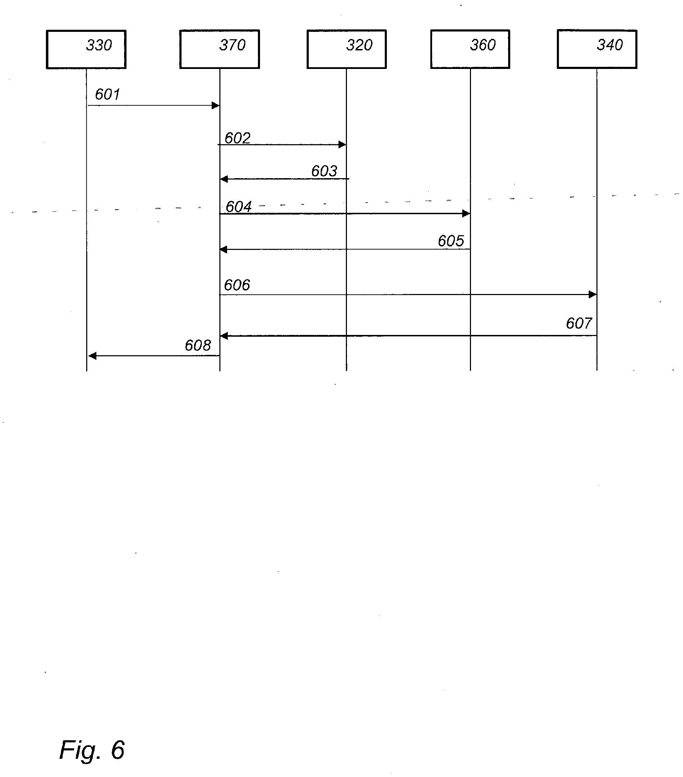

**Figure 6** schematically shows an example of an embodiment of a re-encryption method.

Figure 6 shows processing for the following entities:

| | |
|---|---|
| 320 | Blockchain |
| 330 | User, e.g., client device |
| 340 | KMS |
| 360 | Database, preferably with a public data availability layer |
| 370 | Gateway |

The following processing is shown in figure 6

1. From client device 330 to gateway 370, Re-encryption request with H, S_u, K; shown at 601
2. From gateway 370 to blockchain 320, Get proof P_r that H is in the ACL.pairs mapping for A; shown at 602
3. From blockchain 320 to gateway 370; shown at 603
4. From gateway 370 to database 360, Get ciphertext C for H; shown at 604
5. From database 360 to database to gateway 370, Ciphertext C; shown at 605
6. From gateway 370 to KMS 340, Re-encryption request with H, S_u, K and P_r; shown at 606
7. From KMS 340 to gateway 370, Re-encrypted value R under K and signature S_m; shown at 607
8. From gateway 370 to client device 330; shown at 608

The flow starts with the user requesting re-encryption (1) from the Gateway for handle H under a public key K the user chose on their own. Note that K (and its corresponding secret key Y) can be from any secure public-key encryption scheme and it does not have to support FHE. User also sends a signature S_u that signs (H, K). S_u is signed via the user's Ethereum secret key E_s.

Note that the Gateway and the KMS can compute the user's Ethereum public key E_p from S_u. Also, user's Ethereum address A can be computed from E_p.

The Gateway fetches proof P_r that H is in the "pairs" mapping in the ACL contract for user address A (2) and (3). P_r ensures that the user has access to the ciphertext. P_r is a Merkle tree inclusion proof from the EVM's storage layer.

The Gateway gets the ciphertext C for handle H from the DA (4) and (5) and then sends a re-encryption request to the KMS with C, H, S_u, K and P_r (6).

The KMS checks P_r and S_u and if they verify, it does a re-encryption of the value encrypted by C under public key K, producing ciphertext R without revealing the value to any single party. KMS also signs R to produce a signature S_m. Preferably, the signature is computed also over, in addition to R, the input, e.g., in this case H and/or C. This allows the user to check that the right value was decrypted.

KMS sends R and S_m to the Gateway and it forwards them to the user (8). The user can use their secret key Y to decrypt R. Signature S_m can be used by the user to verify that R comes from the KMS.

An important motivation is to allow for confidential smart contracts on existing public blockchains. It does so without requiring changes to the underlying blockchain protocols or implementations. Moreover, we strive to make writing and using confidential smart contracts as similar as possible to their plaintext equivalents, with composability and gas costs in mind.

Additionally, we propose a method to take advantage of decoupled and parallel FHE computation, making the coprocessor faster and more scalable.

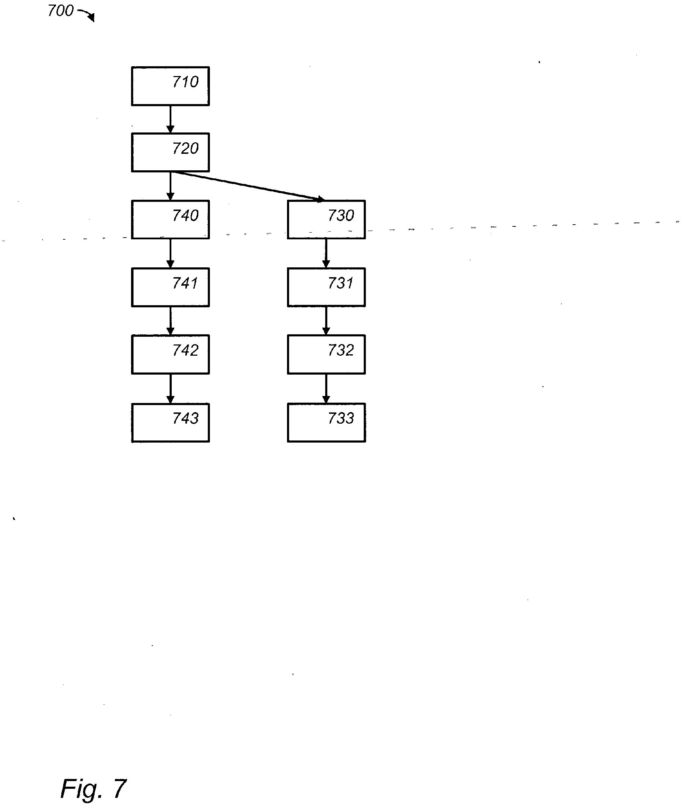

**Figure 7** schematically shows an example of an embodiment of a computation method 700 for executing computations associated with a distributed ledger, the distributed ledger storing a smart contract, the smart contract encoding a predefined computation, a computation result of the computation depending on at least one input to the computation. Method 700 may be computer implemented and comprises

- monitoring (710) transactions on the distributed ledger for activations of the computation,
- upon detecting (720) an activation of the computation

    - performing (730) a smart contract execution, comprising

        - obtaining (731) one or more inputs to the computation, the at least one input being symbolically represented as an input handle referencing the at least one input,
        - symbolically (732) performing the computation, wherein at least one output of the computation is symbolically represented as an output handle referencing the computation result,
        - storing (733) the output handle on the distributed ledger,

    - performing (740) an actual execution of the computation, comprising

        - obtaining (741) the one or more inputs to the computation, including obtaining the at least one input symbolically represented by the input handle in the smart contract execution, from a database, the database associating the input handle and the input,
        - performing (742) an actual execution of the computation on the obtained one or more inputs to the computation, obtaining a corresponding computation result reflecting an actual outcome of the computation,
        - storing (743) the computation result in the database, wherein the database associates the output handle with the computation result.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 700. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

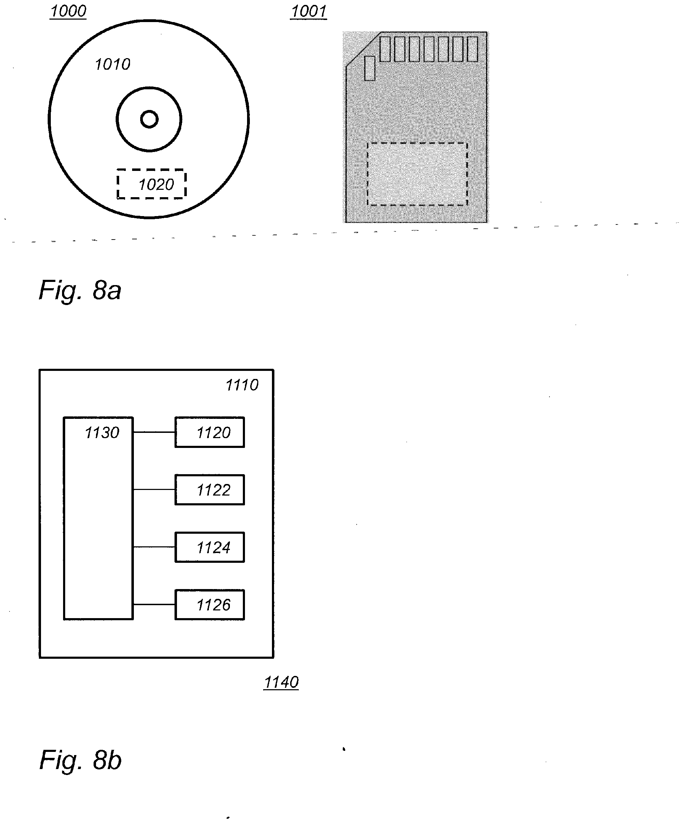

**Figure 8a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method, according to an embodiment, e.g., a method for a compute node, distributed ledger node, or client device. The computer program 1020 may be embodied on the computer readable medium 1000 as physical marks or by magnetization of the computer readable medium 1000. However, any other suitable embodiment is conceivable as well. Furthermore, it_will be appreciated -that, - - although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method.

**Figure 8b** shows in a schematic representation of a processor system 1140 according to an embodiment, e.g., of a compute node, distributed ledger node, client device. The processor system comprises one or more integrated circuits 1110. The architecture of the one or more integrated circuits 1110 is schematically shown in Figure 8b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors, or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A method (700) for executing computations associated with a distributed ledger, the distributed ledger storing a smart contract, the smart contract encoding a predefined computation, a computation result of the computation depending on at least one input to the computation, the method comprising:

   monitoring (710) transactions on the distributed ledger for activations of the computation,

   - upon detecting (720) an activation of the computation

      - performing (730) a smart contract execution, comprising

         - obtaining (731) one or more inputs to the computation, the at least one input being symbolically represented as an input handle referencing the at least one input,
         - symbolically (732) performing the computation, wherein at least one output of the computation is symbolically represented as an output handle referencing the computation result,
         - storing (733) the output handle on the distributed ledger,

      - performing (740) an actual execution of the computation, comprising

         - obtaining (741) the one or more inputs to the computation, including obtaining the at least one input symbolically represented by the input handle in the smart contract execution, from a database, the database associating the input handle and the input,
         - performing (742) an actual execution of the computation on the obtained one or more inputs to the computation, obtaining a corresponding computation result reflecting an actual outcome of the computation,
         - storing (743) the computation result in the database,

   wherein the database associates the output handle with the computation result.

2. The method for executing computations as in Claim 1, wherein

      - the input symbolically represented by the input handle obtained to perform the actual execution of the computation, is obtained in encrypted form,
      - performing the actual execution of the computation is performed on the input in encrypted form using a fully homomorphic encryption (FHE) scheme, the corresponding computation result being obtained in encrypted form,
      - the database associating the input handle with an encrypted input, and the output handle with an encrypted computation result.

3. The method for executing computations as in Claim 1 or 2, wherein the at least one input is not stored on the distributed ledger.

4. The method for executing computations as in Claim 2, wherein the encrypted input, and/or encrypted computation result are encrypted with a public key, wherein the corresponding private key is not available during the performing of the actual execution of the computation.

5. The method for executing computations as in any one of the preceding claims, e.g., as in Claim 4, wherein the predefined computation encoded in the smart contract is encoded as a sequence of branchless operations.

6. The method for executing computations as in any one of the preceding claims, wherein the predefined computation encoded in the smart contract is encoded as a sequence of operations, an operation receiving as input one or more handles, each handle referencing an input to the operation, and optionally one or more actual inputs not represented as a handle, an output handle of the operation being computed from at least an identifier representing the operation, the handles received as input and the optional actual inputs.

7. The method for executing computations as in any one of the preceding claims, wherein the computation is initiated by a smart contract stored on the distributed ledger, wherein the initiation may comprise one or more input handles for the computation.

8. The method for executing computations as in any one of the preceding claims, wherein the distributed ledger is a blockchain, e.g., Ethereum.

9. The method for executing computations as in any one of the preceding claims, wherein

   - the database is external to the distributed ledger, or
   - the database is internal to the distributed ledger, and wherein
   - the database comprises a local database, and/or
   - the database has a public data availability layer.

10. The method for executing computations as in any one of the preceding claims, wherein an incorrect input to the computation in performing the smart contract execution is replaced with a predefined value or handle referencing the predefined value, wherein the corresponding input to the computation in performing an actual execution is replaced with the same predefined value.

11. The method for executing computations as in any one of the preceding claims, wherein the computation in performing an actual execution is optimized for parallel execution.

12. The method for executing computations as in any one of the preceding claims, comprising

   - storing an input in the database, comprising

      - determining a handle for the input,
      - storing the input in the database, wherein the input is associated with the handle,
      - computing a signature for the handle, returning the signature, wherein the signature is included in a transaction stored on the distributed ledger initiating the computation on the input handle, the smart contract verifying the signature.

13. The method for executing computations as in any one of the preceding claims, e.g., as in Claim 12, comprising

   - storing an input in the database, comprising

      - receiving the input and a corresponding zero-knowledge proof of knowledge (ZKPoK) for the input,
      - determining a handle for the input, the handle being computed from at least the input and optionally the corresponding zero-knowledge proof of knowledge, the method further comprising
      - verifying the zero-knowledge proof of knowledge when storing the input in the database, and/or
      - verifying the zero-knowledge proof of knowledge when performing the actual computation.

14. The method for executing computations as in Claim 2, optionally in combination with any one of the preceding claims, wherein the encrypted input and/or the encrypted computation result are encrypted with a public key, wherein the corresponding private key is available to a key management service (KMS), the method comprising for the key management service

- receiving as input a handle and obtaining from the database the corresponding encrypted data,
- decrypting the encrypted data using the private key, and/or re-encrypting the encrypted data,
- providing the decrypted data and/or re-encrypted data.

15. The method for executing computations as in Claim 14, wherein the distributed ledger comprises a KMS contract associated with the KMS, the method comprising

  - initiating a decrypt function of the KMS contract, and providing to the KMS contract a handle for decryption,
  - storing the handle on the distributed ledge in a list for decryption,
  - emitting a decryption event on the distributed ledger
  - monitoring transactions on the distributed ledger for the decryption event, and upon detecting the decryption event,

    - obtaining a proof that the handle is stored in the list for decryption,
    - sending the handle, and proof to the KMS,
    - providing the decrypted value on the distributed ledger.

16. The method for executing computations as in any one of the preceding claims, wherein the distributed ledger stores an access control smart contract, the access control smart contract mapping addresses on the distributed ledger, e.g., a user address and/or a smart contract address, to handles indicating if the address is allowed to decrypt and/or re-encrypt the handle.

17. The method of any one of the preceding claims, wherein the one or more inputs to the computation and/or the computation result are stored in a state of the distributed ledger and/or in a transaction of the distributed ledger.

18. The method of any one of the preceding claims, the smart contract encoding a further predefined computation producing a further computation result, the method comprising:

  - monitoring (710) transactions on the distributed ledger for activations of the further computation,
  - upon detecting (720) an activation of the further computation

    - performing (730) a smart contract execution, comprising

      - symbolically (732) performing the further computation, wherein at least one output of the further computation is symbolically represented as an output handle referencing the computation result,
      - storing (733) the output handle on the distributed ledger,

    - performing (740) an actual execution of the further computation, comprising

      - performing (742) an actual execution of the further computation, obtaining a corresponding computation result reflecting an actual outcome of the further computation,
      - storing (743) the computation result in the database, wherein the database associates the output handle with the computation result.

19. The method of Claim 18, wherein the further computation comprises generating a random number.

20. A method for a distributed ledger node (120) executing symbolic computations associated with a distributed ledger, the distributed ledger storing a smart contract, the smart contract encoding a predefined computation, a computation result of the computation depending on at least one input to the computation, the method comprising:

  - monitoring (710) transactions on the distributed ledger for activations of the computation,
  - upon detecting (720) an activation of the computation

    - performing (730) a smart contract execution, comprising

      - obtaining (731) one or more inputs to the computation, the at least one input being symbolically represented as an input handle referencing the at least one input,
      - symbolically (732) performing the computation, wherein at least one output of the computation is symbolically represented as an output handle referencing the computation result,
- storing (733) the output handle on the distributed ledger,

21. A method for a computation node (110) executing actual computations associated with a distributed ledger, the distributed ledger storing a smart contract, the smart contract encoding a predefined computation, a computation result of the computation depending on at least one input to the computation, the method comprising:

- monitoring (710) transactions on the distributed ledger for activations of -the computation,
- upon detecting (720) an activation of the computation

- performing (740) an actual execution of the computation, comprising

- obtaining (741) the one or more inputs to the computation, including obtaining the at least one input symbolically represented by the input handle in the smart contract execution, from a database, the database associating the input handle and the input,
- performing (742) an actual execution of the computation on the obtained one or more inputs to the computation, obtaining a corresponding computation result reflecting an actual outcome of the computation,
- storing (743) the computation result in the database, wherein the database associates the output handle with the computation result.

22. A method for a client device (120) for executing computations associated with a distributed ledger, the distributed ledger storing a smart contract, the smart contract encoding a predefined computation, a computation result of the computation depending on at least one input to the computation, the method comprising:

- determining a handle for an input,
- storing the input in the database, wherein the input is associated with the handle through a database interface,
- receiving a signature for at least the handle through the database interface,
- generating a transaction to initiate the computation, the transaction including the handle and signature.

23. A method (700) for executing computations associated with a distributed ledger, the distributed ledger storing a smart contract, the smart contract encoding a predefined computation producing a computation result, the method comprising:

- monitoring (710) transactions on the distributed ledger for activations of the computation,
- upon detecting (720) an activation of the computation

- performing (730) a smart contract execution, comprising

- symbolically (732) performing the computation, wherein at least one output of the computation is symbolically represented as an output handle referencing the computation result,
- storing (733) the output-handle on the distributed ledger,
- performing (740) an actual execution of the computation, comprising
- performing (742) an actual execution of the computation, obtaining a corresponding computation result reflecting an actual outcome of the computation,
- storing (743) the computation result in the database, wherein the database associates the output handle with the computation result.

24. A system comprising: one or more processors; and one or more storage devices storing instructions that, when executed by the one or more processors, cause the one or more processors to perform operations for any one of claims 1-23.

25. A transitory or non-transitory computer storage medium encoded with instructions that, when executed by one or more computers, cause the one or more computers to perform the method according any one of claims 1-23.

100

| 110 |
|---|
| 111 |
| 112 |
| 113 |

| 120 |
|---|
| 121 |
| 122 |
| 123 |

| 130 |
|---|
| 131 |
| 132 |
| 133 |

| 140 |
|---|
| 141 |
| 142 |
| 143 |

160

## Fig. 1a

102

| 130 |
|---|

| 120.1 |
|---|

| 110 |
|---|

172

| 120.2 |
|---|

| 140 |
|---|

## Fig. 1b

103

210

220

221

110

115

116

120

115

160

130

Fig. 2a

*Fig. 2b*

Fig. 2c

Fig. 2d

300

*Fig. 3*

*Fig. 4*

*Fig. 5*

Fig. 6

700

```
        ┌──────────┐
        │   710    │
        └──────────┘
             │
             ▼
        ┌──────────┐
        │   720    │───────────────┐
        └──────────┘               │
             │                     ▼
             ▼                ┌──────────┐
        ┌──────────┐         │   730    │
        │   740    │         └──────────┘
        └──────────┘               │
             │                     ▼
             ▼                ┌──────────┐
        ┌──────────┐         │   731    │
        │   741    │         └──────────┘
        └──────────┘               │
             │                     ▼
             ▼                ┌──────────┐
        ┌──────────┐         │   732    │
        │   742    │         └──────────┘
        └──────────┘               │
             │                     ▼
             ▼                ┌──────────┐
        ┌──────────┐         │   733    │
        │   743    │         └──────────┘
        └──────────┘
```

*Fig. 7*

1000

1010

1020

1001

Fig. 8a

1110

1130

1120

1122

1124

1126

1140

Fig. 8b

Europäisches
Patentamt

European
Patent Office

Office européen
des brevets

# EUROPEAN SEARCH REPORT

**Application Number**

EP 24 31 5270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/386834 A1 (FURUKAWA RYO [JP]) 19 December 2019 (2019-12-19) <br> * figures 2-5 * <br> * paragraph [0009] * <br> * paragraph [0044] * <br> * paragraph [0049] * <br> * paragraph [0054] - paragraph [0056] * <br> * paragraph [0059] * <br> ----- | 1-20, 23-25 | INV. <br> H04L9/00 |
| A | SOLOMON RAVITAL ET AL: "smartFHE: Privacy-Preserving Smart Contracts from Fully Homomorphic Encryption", 2023 IEEE 8TH EUROPEAN SYMPOSIUM ON SECURITY AND PRIVACY (EUROS&P), IEEE, 3 July 2023 (2023-07-03), pages 309-331, XP034386838, DOI: 10.1109/EUROSP57164.2023.00027 <br> * Section 2. * <br> * Section 4.2. * <br> ----- | 1-20, 23-25 | |
| A | US 2020/344290 A1 (KRISHNASWAMY DILIP [IN] ET AL) 29 October 2020 (2020-10-29) <br> * figure 6 * <br> * paragraph [0082] - paragraph [0083] * <br> * paragraph [0098] * <br> ----- | 1-20, 23-25 | TECHNICAL FIELDS SEARCHED (IPC) <br><br> H04L |

The present search report has been drawn up for all claims

| Place of search | Date of completion of the search | Examiner |
|---|---|---|
| Munich | 24 October 2024 | Caragata, Daniel |

EPO FORM 1503 03.82 (P04C01)

Europäisches
Patentamt

European
Patent Office

Office européen
des brevets

**Application Number**

EP 24 31 5270

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-20, 23-25

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

```
1. claims: 1-20, 23-25

   Methods for limited execution of smart contracts.
                    ---

2. claim: 21

   Method for complete execution of smart contracts.
                    ---

3. claim: 22

   Method for facilitating secure initiation of smart
   contracts.
                    ---
```

## ANNEX TO THE EUROPEAN SEARCH REPORT
## ON EUROPEAN PATENT APPLICATION NO.

EP 24 31 5270

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | | Publication date |
|---|---|---|---|---|
| US 2019386834 A1 | 19-12-2019 | JP | 6940182 B2 | 22-09-2021 |
| | | JP | WO2018158936 A1 | 16-01-2020 |
| | | US | 2019386834 A1 | 19-12-2019 |
| | | WO | 2018158936 A1 | 07-09-2018 |
| US 2020344290 A1 | 29-10-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FABIAN VOGELSTELLER** ; **VITALIK BUTERIN**. ERC-20: Token Standard. *Ethereum Improvement Proposals*, 20 November 2015
- **ILARIA CHILLOTTI**. *TFHE: Fast Fully Homomorphic Encryption over the Torus?*
- **ZVIKA BRAKERSKI**. *Fully Homomorphic Encryption without Bootstrapping*
- **JUNFENG FAN** ; **FREDERIK VERCAUTEREN**. *Somewhat Practical Fully Homomorphic Encryption*